# EUROPÄISCHE PATENTANMELDUNG

(11) **EP 2 975 744 A2**
(43) Veröffentlichungstag der Anmeldung: **20.01.2016**
(21) Anmeldenummer: 15175732.5
(22) Anmeldetag: 07.07.2015
(51) Int. Cl.: H02K 21/14, H02K 49/10

(54) **VORRICHTUNG ZUR OPTIMIERTEN BERÜHRUNGSLOSEN STROMERZEUGUNG AN METALLISCHEN GEGENELEMENTEN**

(30) Priorität: 07.07.2014 DE 202014005494 U
(71) Anmelder: Magnic Innovations GmbH & Co. KG, 33829 Borgholzhausen (DE)
(72) Erfinder: Strothmann, Dirk, 33829 Borgholzhausen (DE)
(74) Vertreter: Busse & Busse

(57) **Zusammenfassung**

Vorrichtung zur berührungslosen Stromerzeugung an einem stromleitenden Gegenelement (1), mit zumindest einem bewegbar gelagerten magnetisch gestörten Magnetelement (2), und zumindest einer Spule (7), in deren wenigstens einer Wicklung durch das Magnetelement (2) bzw. durch ein weiteres mit dem Magnetelement (2) weiteres physikalisch gekoppeltes Magnetelement ein Strom induzierbar ist, der zum Betrieb eines Verbrauchers (6) verwendbar ist, wobei das Magnetelement (2) durch magnetische Wechselwirkung mit dem Gegenelement (1) bewegbar ist sowie ein über eine solche Vorrichtung versorgter Sensor.

## Beschreibung

Die vorliegende Erfindung betrifft eine Vorrichtung zur berührungslosen Stromerzeugung an einem stromleitenden Gegenelement, mit zumindest einem bewegbar gelagerten ungestörten oder magnetisch gestörten Magnetelement (das magnetisch gestörte Magnetelement kann entweder ein Halbach-Array oder Halbach-Zylinder sein, die im folgenden Halbach-Magnetelement genannt werden, oder eine mit einem diamagnetischen Mantel gestörte geradlinige oder ringförmige Magnetanordnung, oder ein mit einem diamagnetischen Mantel gestörtes Halbach Magnetelement), und zumindest einer Spule , in deren wenigstens einer Wicklung durch das Magnetelement bzw. durch ein weiteres mit dem Magnetelement physikalisch gekoppeltes Magnetelement ein Strom induzierbar ist, der zum Betrieb eines Verbrauchers verwendbar ist, wobei das Magnetelement durch magnetische Wechselwirkung mit dem Gegenelement bewegbar ist. Unter ringförmig verstehen wir hier und im weiteren nicht nur kreis- und ellipsenförmige Anordnungen sondern allgemeiner Umfangslinien zusammenhängender abgerundeter Flächen, wie z.B. Umfangslinien von abgerundeten Rechtecken als Ergebnis einer um 2 oder mehr Kreise rotierenden Kette. Des Weiteren betrifft die Erfindung eine entsprechende Vorrichtung, die zur Stromerzeugung und insbesondere als Beleuchtungsanlage auf einem Fahrzeug insbesondere einem Fahrrad anzubringen ist, sowie ein Fahrrad, welches eine solche Vorrichtung zur Stromerzeugung wie auch als Beleuchtungsanlage aufweist. Darüber hinaus betrifft die Erfindung eine entsprechende Vorrichtung, die zur berührungslosen Signalerkennung und Weiterleitung in besonders einfacher und effizienter Weise zu verwenden ist.

Aus dem deutschen Gebrauchsmuster DE202011107060U1 ist eine Vorrichtung bekannt, bei der anstelle eines gestörten Magnetelements zumindest ein bewegbares nicht gestörtes Magnetelement verwendet wird, so dass bei Relativbewegung zwischen stromleitendem Gegenelement und Magnetelement Wirbelströme im Gegenelement induziert werden, deren Magnetfelder eine den Magnetfeldern des Magnetelements entgegengerichtete Kraft ausüben und dieses somit bewegen. Die durch Wirbelstromkopplung bewegten Magneten induzieren nun direkt oder über ein weiteres mitbewegtes Magnetelement einen Strom in anliegende Spulenelemente, der zum Verbrauch durch einen Verbraucher geeignet ist.

Um besonders kleine und leichte Generatoren mit der in DE202011107060U1 beschriebenen Funktionsweise zu realisieren, ist es vorteilhaft, mit möglichst geringer Magnetmasse eine möglichst starke Magnetwirkung in dem für die Vorrichtung relevanten Bereich zu erzielen. Dies bedeutet, dass eine Verstärkung des Magnetfeldes in Richtung des stromleitenden Gegenelementes eine größere Leistungsübertragung bzw. eine Verkleinerung ohne Leistungsverlust ermöglicht. Zusätzlich bedeutet eine Verstärkung des Magnetfeldes in Richtung der Spulenelemente eine Verstärkung des induzierten Stromes und damit eine höhere Generatorleistung.
Es ist Aufgabe der vorliegenden Erfindung einen berührungslosen mittels Wirbelstromkopplung an metallischen Gegenelementen arbeitenden Generator zu realisieren, dessen Baugröße und Gewicht ohne Leistungsverlust wesentlich unterhalb solchen aus dem Stand der Technik bekannten berührungslosen Generatoren liegt.

Weiterhin ist es Aufgabe der Erfindung einen Fahrzeuggenerator mit vorbeschriebenen Eigenschaften zu schaffen sowie eine Beleuchtungsanlage bzw. eine Fahrradbeleuchtung mit berührungslosem Generator, deren Baugröße und Gewicht bei gleicher Lichtleistung wesentlich unterhalb solchen aus dem Stand der Technik bekannten berührungslosen Anlagen liegt.

Dieses ist gleichbedeutend damit, dass bei gleichbleibender Größe bzw. gleichbleibendem Gewicht die Generatorleistung bzw. Lichtleistung einer Beleuchtungsanlage erhöht ist. Darin eingeschlossen ist eine möglichst einfache und Anordnung und Montage der Vorrichtung, sowie eine effiziente Elektronik für angeschlossene Verbraucher, die eine gegenüber dem Stand der Technik erhöhte Generatorleistung ermöglicht.

Ebenso ist es Aufgabe der Erfindung ein Fahrrad bzw. ein Teil eines Fahrrades zu schaffen, dessen Beleuchtung oder Stromversorgung mittels eines solchen Generators erreicht wird.

Darüber hinaus ist es Aufgabe der Erfindung, eine berührungslose mittels Wirbelstromkopplung arbeitende Vorrichtung zur Signalerkennung und -Weiterleitung zu schaffen, die unter Ausnutzung vorbeschriebener Generatoreigenschaften besonders einfach und effizient arbeitet.

Die Aufgabe wird gelöst durch einen Gegenstand gemäß Anspruch 1 sowie gemäß Anspruch 15. Vorteilhafte Weiterbildungen sind den auf diese Ansprüche rückbezogenen Unteransprüchen sowie den nachfolgenden Figurenbeschreibungen zu entnehmen.

Die eingangs gestellte Aufgabe wird ebenfalls durch ein Fahrrad gelöst, welche eine Fahrzeugbeleuchtungsanlage wie vor- oder nachbeschrieben aufweist und welches als Gegenelement eine Fege besitzt.

Ein Halbach-Array ist eine lineare Anordnung von Permanentmagneten die ermöglicht, dass sich der magnetische Fluss auf der einen Seite der Anordnung fast aufhebt, auf der anderen Seite jedoch verstärkt. Ein Halbach-Array setzt sich aus Segmenten von Permanentmagneten zusammen, deren Magnetisierungsrichtung gegeneinander jeweils um 90° in Richtung der Längsachse des Arrays gekippt ist. Dadurch stören sich die Magnetfelder bzw. drängen sich gegenseitig so ab, dass die Feldlinien auf einer Seite enger zusammenrücken, was hier die Erhöhung der magnetischen Flussdichte bewirkt. Auf der gegenüberliegenden Seite liegen die Feldlinien weniger eng als im ungestörten Magneten, daher wird hier das Feld schon in geringem Abstand abgeschwächt, bzw. verschwindet völlig.
Bei einem Halbach-Zylinder handelt es sich um eine kreisförmige Anordnung von Permanentmagneten in Form von Kreissegmenten, deren Magnetausrichtungen wie beim Halbach Array so gegeneinander gekippt sind, dass die magnetische Flussdichte entweder auf der Innenseite verstärkt und auf der Außenseite abgeschwächt oder auf der Außenseite verstärkt und auf der Innenseite abgeschwächt bzw. ausgelöscht ist.

Stark diamagnetische Materialien wie Bismut oder pyrolytisches Graphit haben die Eigenschaft, dass sie die Feldlinien eines Magnetfeldes verdrängen, sich also sowohl vom Nordpol wie auch vom Südpol eines Magneten abstoßen, wodurch sich beispielsweise Schwebeeffekte realisieren lassen. Durch ein diamagnetisches Material in einem Magnetfeld werden die Feldlinien aus dem diamagnetischen Material nach außen verdrängt und somit umgelenkt. Wird eine Magnetanordnung an einer oder mehreren Seiten mit einem diamagnetischen Element wie z.B. Bismut ummantelt, so wird ein Teil der Feldlinien in Richtung der nicht ummantelten Seiten umgelenkt, so dass hier eine größere Feldliniendichte zu beobachten ist. Wird beispielsweise ein Magnetzylinder an seiner Ober- und Unterseite aber nicht an der Außenseite entlang seines Umfangs mit einer diamagnetischen Scheibe abgedeckt, so werden durch die Störung die Feldlinien zur Außenseite des Zylinders abgedrängt, so dass an der Außenseite einer solchen Anordnung eine höhere Feldliniendichte als am nicht diamagnetisch abgedeckten Zylinder vorliegt. Eine entsprechende Ausbildung eines Magnetelements führt somit zu einer vorteilhaften Verstärkung des Magnetfeldes in Richtung des Gegenelements.

Nachbeschriebene Eigenschaften, die unter den Punkten HCIR (Halbach-Element ringförmig), DIA (Diamagnetisch) sowie unter HARR1-HARR8 (Halbach-Array) aufgeführt sind, betreffen Generatoren, die mit Halbach-Magnetelementen sowie diamagnetischen Elementen in Ihrer Wirkungsweise verstärkt sind.

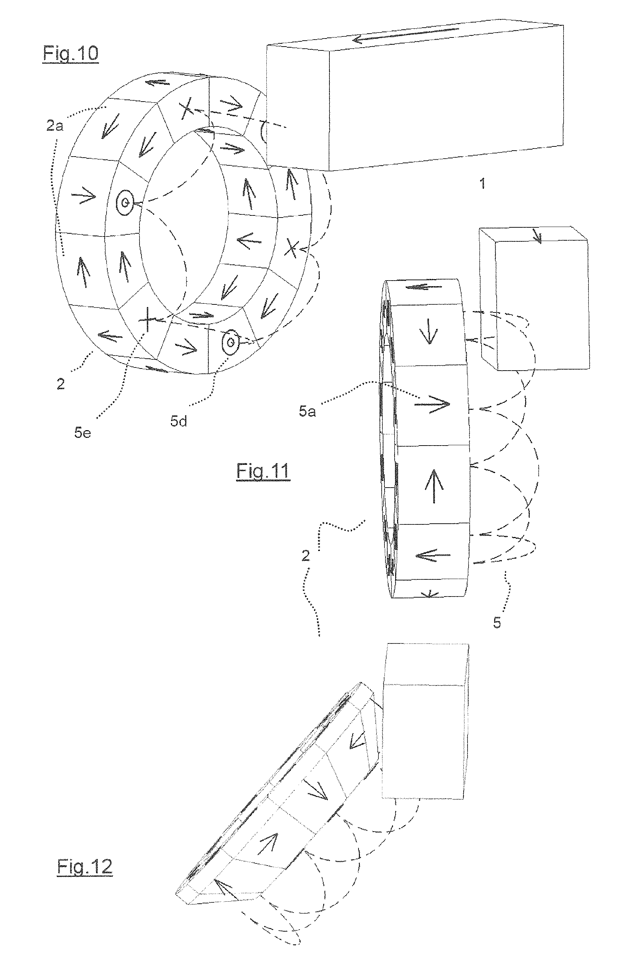

In den Zeichnungen werden die Segmente der verschiedenen Halbach-Anordnungen jeweils in identischer Größe gezeigt. Erfindungsgemäß können die Größen der verschiedenen Segment variieren, um eine möglichst optimale Wirkung zu erreichen. Es hat sich gezeigt, dass unter anderem eine relative Vergrößerung der Segmente mit radialer Magnetfeldausrichtung im Vergleich zu Segmenten mit eher tangentialer Ausrichtung vorteilhaft sein kann. Zudem sind die durch Pfeile angedeuteten Magnetfeldorientierungen nicht als feste Vorgaben zu verstehen. Durch Variieren der Winkel der einzelnen Halbach-Segmente zueinander (in Abstimmung mit der Segmentgröße) lässt sich die gegenseitige Beeinflussung der Magnetfelder und somit die Wirkung des Generators beeinflussen. Auch ist die Form nicht auf rechtwinklige Magnetkanten beschränkt, beispielsweise kann eine Ausprägung als Kegelrad (Fig. 12) im Fall eines ringförmigen Halbach Elements vorteilhaft sein.

Weitere nachbeschriebene erfindungsgemäße Vorrichtungen unter den Punkten SENS (Sensor), POS1-POS5 (Abstand & Positionierung) und Punkt ELK1-ELK5 (Elektronik) basieren auf berührungslosen Generatoren die gemäß Punkt HCIR und DIA wie auch nach HHARR1-HHARR8 aufgebaut sind und ebenso auf berührungslosen Generatoren mit Wirbelstrom- bzw. Magnetverzahnung mit ungestörten Magnetelementen, wie sie aus dem Stand der Technik bekannt sind.

Die Leistung und auch die maximale Wirkreichweite (bzw. max. Abstand des Generators zum Gegenelement) eines erfindungsgemäßen Systems ist gegenüber dem Stand der Technik deutlich erhöht, ohne dass zusätzliche Magnetmasse zu verwenden ist. Entsprechend ist eine Miniaturisierung ohne Leistungsverlust gegenüber dem Stand der Technik möglich.

### HCIR)

Eine erfindungsgemäße Ausgestaltung der Erfindung sieht einen kreisförmigen Aufbau des Magnetelementes als Halbach-Zylinder mit einem nach außen verstärkten und nach innen abgeschwächten Magnetfeld vor, wobei der Halbach-Zylinder durch Wirbelstromverzahnung mit dem Gegenelement in eine Rotationsbewegung versetzt wird. Da das stromleitende Gegenelement beabstandet außerhalb des Halbach Zylinders angeordnet ist, kann das auf der Außenseite verstärkte Magnetfeld weiter bzw. über einen größeren Luftspalt in das Gegenelement eindringen und in diesem einen Wirbelstrom erzeugen. Die Wirbelstromverzahnung mit dem Gegenelement wird somit durch die Halbach -Anordnung verstärkt. Auf der Innenseite des Halbach-Zylinders der erfindungsgemäßen Vorrichtung liegen schwächere Magnetfelder vor, was gegenüber dem Stand der Technik den Vorteil hat, dass im Falle der Anbringung des Zylinders auf metallischen Kugellagern keine bzw. eine geringere Abbremsung durch Wirbelstrominduktion in die Lagerkomponenten auftritt.
Eine Ausgestaltung einer erfindungsgemäßen Vorrichtung sieht vor, dass eine oder mehrere Spulen beabstandet um den Halbach-Zylinder herum verlaufen bzw. außerhalb in einer Wirkposition zur Strominduktion am Halbach-Zylinder angeordnet sind. Gegenüber dem Stand der Technik wird durch die Verstärkung der Magnetfelder auf der Außenseite ein größerer Stromfluss in die Spulenelemente induziert, was die Leistungsfähigkeit des Systems zur Stromerzeugung zusätzlich erhöht.

### HCIR.1)

Die Bewegung des stromleitenden Gegenelementes kann linear zum Generator mit dem darauf angebrachten Halbach-Zylinder erfolgen. Hierbei kann das Gegenelement beispielsweise eine Schiene sein, und der Generator beabstandet entlang der Schiene bewegt werden, so dass der Halbach- Zylinder per Wirbelstromverzahnung mit der Schiene in Rotation gebracht wird. Der Generator kann sich beispielsweise auf einem Förderband oder einem Schiebetor befinden, dass entlang eines stromleitenden Elementes bewegt wird. Ebenso kann der Generator ortsfest verankert werden, und beim Passieren eines oder mehrerer kontinuierlicher oder unterbrochener Elemente kann der Halbach-Zylinder auf dem Generator in Rotation versetzt werden.

### HCIR.2)

Die Bewegung des stromleitenden Gegenelementes kann in einer Drehbewegung zum Generator erfolgen. Es kann sich bei dem Gegenelement um ein rotierendes Rad eines Fahrzeugs, insbesondere das Rad bzw. die Felge eines Fahrrades handeln, wobei der Generator am Fahrzeug, beispielsweise an der Fahrradgabel oder an der Bremsvorrichtung befestigt oder in diese integriert ist.

### HCIR.3)

Erfindungsgemäß ist ebenso vorgesehen, dass an den Segmenten eines kontinuierlichen oder nicht kontinuierlichen Gegenelementes selbst Magneten angebracht sein können, so dass eine noch stärkere Kraftübertragung zum gestörten Magnetelement erreicht wird.

Wesentlich für alle vor- und nachbeschriebenen Ausgestaltungen ist es, eine Vorrichtung zu schaffen, bei der der Abstand zwischen Gegenelement und Generator unter starker Wirbelstromkopplung ausreichend groß gewählt werden kann, um Berührungen durch mechanische Unregelmäßigkeiten (wie z.b. seitlich schwankende Fahrradfelgen) zu vermeiden. In der Regel ist es vorteilhaft, den Generator vollständig in einem Gehäuse zu kapseln, wobei häufige Berührung von Generatorgehäuse und Gegenelement im Extremfall zur Zerstörung des Gehäuses bzw. des Generators führen könnte. Aus diesem Grund ist es vorteilhaft, das Generatorgehäuse dünnwandig und extrem nah am Magnetelement zu platzieren, um den Luftspalt zwischen Gehäuse und Gegenelement nicht zu verkleinern. Klassische Magnetzylinder, wie sie aus dem Gebrauchsmuster DE202011107060U1 bekannt sind, benötigen außer der üblichen Korrosionsschutzbeschichtung der Magneten in der Regel keine weiteren Hüllen zur Fixierung, da die Magnetsegmente sich gegenseitig anziehen und mittels Klebstoff leicht dauerhaft beispielsweise auf einer Metallhülse fixiert werden können. Für Halbach-Zylinder ergibt sich das Problem, dass die sich gegenseitig störenden Magnetfelder die einzelnen Magnetsegmente nach außen abstoßen, so dass eine beständige Fixierung mittels Klebstoffen extrem schwierig bzw. sehr kostenintensiv ist. Bislang wird der Großteil der industriell produzierten Halbach Zylinder mit nach innen verstärktem Magnetfeld ausgerichtet, wobei üblicherweise eine stabile und kostengünstige Fixierung der Magnetformation mittels einer am Außenumfang anliegenden Hülse (beispielweise aus Stahl oder Aluminium) realisiert wird, die die Verschiebung von Magnetsegmenten nach außen verhindert. Im Fall eines Halbach Zylinders mit nach außen verstärktem Magnetfeld ist eine solche Fixierung nachteilig, da der über einen Luftspalt erreichbare Wirkbereich des Halbach-Zylinders um die Wandstärke der Hülse reduziert wird. Außerdem ist bei der Verwendung einer kostengünstigen Metallhülse eine Störung und damit eine Abschwächung der Magnetfelder möglich. Ein weiterer Nachteil einer Hülse zur Fixierung der Halbach Anordnung besteht darin, dass durch notwendige Fertigungstoleranzen der Außendurchmesser des Halbach-Zylinders kleiner als der Innendurchmesser der Hülse ist, so dass die Magnetsegmente nicht eine optimale Halbach-Anordnung annehmen, sondern Lücken verbleiben, die den Magnetfeldverstärkenden Halbach Effekt abschwächen.

Für den vorbeschriebenen berührungslosen Generator ist ein ausreichend großer Luftspalt zum Gegenelement wesentlich. Dieses lässt sich über eine möglichst dünnwandige Hülse zur Fixierung der Magnetformation mit den vorbeschriebenen Nachteilen erreichen.

### HCIR.5)

Ein erfindungsgemäße Vorrichtung vermeidet diese Nachteile, indem anstelle einer Hülse eine reiß- und zugfeste Faser (wie z.b. Carbon, Kevlar oder Graphen) zur Fixierung der Magnetanordnung verwendet wird. Die Faser ist erst nachträglich mit hoher Zugkraft um den vorfixierten Magnetzylinder zu wickeln, so dass die Magnetsegmente in Ihrer Ausgangsposition verbleiben und die durch Fertigungstoleranzen auftretenden Lücken zwischen den Magnetsegmenten vermieden werden.

Im Vergleich zur Wandstärke einer Aluminiumhülse (für einen Halbach- Zylinder mit 20mm Durchmesser, 15mm Höhe und sehr starken Neodymmagneten mit Energiedichte von ca. ∼50 MGOe ist eine Wandstärke von etwa 0,5 -1 Milimeter geeignet) kann man mit einer Faserstärke von 0,1mm deutlich Raum an der Außenseite einsparen und durch nachträgliches Anbringen der Faserhülle die Magnetsegmente dichter anordnen, wodurch die Magnetstärke auf der Zylinder-Außenseite erhöht wird. Mittlerweile ist auch die Produktion eines Halbach-Zylinders und Halbach-Ringes in einem einzelnen Stück ohne Einbußen bei der Magnetstärke möglich. Dies stellt auch eine erfindungsgemäße Ausgestaltung dar.

### HCIR.6)

Um den Platzbedarf für die Ummantelung zu minimieren, ist es erfindungsgemäß vorgesehen an der Zylinderaußenseite Rillen zur Aufnahme der Haltefasern einzulassen, so dass abgesehen von den Rillen kein zusätzlicher Platzbedarf zur Fixierung an der Außenseite besteht.

### DIA.)

Anstelle von Halbach-Zylindern können erfindungsgemäß auch durch diamagnetische Mäntel gestörte Halbach Zylinder mit nach außen verstärktem Magnetfeld sowie durch diamagnetische Mäntel gestörte ringartige Magnetanordnungen ohne Halbach-Ausrichtung verwendet werden. Der diamagnetische Mantel ist auf der Ober- und Unterseite der Magnetzylinder/ Ringe angebracht und kann beispielsweise aus kreisförmigen Bismut Platten bestehen. Auf diese Weise werden die Feldlinien weiter zur Außenseite des Zylinders/ Ringes und damit auch in Richtung des Gegenelements abgedrängt, so dass sich die Reichweite des für die Wirbelstromverzahnung mit dem Gegenelement verantwortlichen Magnetfeldes erhöht.

Erfindungsgemäße Ausgestaltungen DIA, DIA.1), DIA.2) und DIA.3) gehen durch entsprechende diamagnetische Störung der in HCIR, HCIR.1), HCIR.2) und HCIR.3) beschriebenen Vorrichtungen aus diesen hervor und zeichnen sich durch die zusätzlich vergrößerte Reichweite der Magnetfelder ins Gegenelement aus. Ein weiterer Vorteil der Ausgestaltungen DIA, DIA.1), DIA.2) und DIA.3) liegt darin, dass sich der diamagnetische Deckel/Boden auch zur Fixierung der Magnetanordnung eignet, indem die Anordnung beim Verkleben mit Druck von Deckel und Boden zusammengehalten wird. Somit entfällt bei Verwendung dieser Methode auch der Zusatzaufwand für eine Ummantelung, wie in HCIR.5) und HCIR.6) beschrieben.

Eine erfindungsgemäße Ausgestaltung der Erfindung sieht den Aufbau des Magnetelementes in Form eines oder mehrerer Halbach-Arrays vor. Die im folgenden gemachten Erläuterungen für ein Halbach-Array gelten dabei uneingeschränkt auch für zwei oder mehr Halbach Arrays.

Bei Relativbewegung zwischen Gegenelement und Halbach-Array entsteht eine Wirbelstromverzahnung zwischen Halbach Array und stromleitendem Gegenelement, so dass auf das Halbach Array eine Kraft in Bewegungsrichtung des Gegenelements wirkt und dieses mitbewegt. Dabei ist das Halbach-Array erfindungsgemäß so orientiert, dass die Seite mit verstärktem Magnetfeld in Richtung des Gegenelements ausgerichtet ist. Dadurch kann das in Richtung des Gegenelementes verstärkte Magnetfeld weiter bzw. über einen größeren Luftspalt in das Gegenelement eindringen, so dass die Wirbelstromverzahnung mit dem Gegenelement verstärkt wird, bzw. über eine größere Reichweite wirksam ist.

### HARR1)

Eine Ausgestaltung der Erfindung sieht vor , dass das Halbach Array oder diamagnetisch gestörte Magnetelement schwenkbar gelagert und gegen die Kraft eines Kraftspeichers bewegbar ist. Ist das Gegenelement nicht kontinuierlich, sondern besteht aus Segmenten, die nur temporär für eine Wirbelstromverzahnung mit dem Halbach-Array sorgen, sieht eine erfindungsgemäße Anordnung vor, dass das Halbach-Array ausgehend von einer Startposition in der Phase der Wirbelstromverzahnung mit einem Segmentabschnitt des Gegenelementes gegen die Kraft eines Kraftspeichers, der als Federelement ausgebildet sein kann, bewegt wird, so dass in der Phase der ausbleibenden Wirbelstromverzahnung (wenn sich das zuvor wirbelstromverzahnte Segment des Gegenelementes durch Weiterbewegung aus der Wirkposition des Halbach-Arrays entfernt hat), das Halbach-Array vom Federmechanismus in die Startposition ohne Wirbelstromverluste zurückbewegt wird.

Der Generator kann sich beispielsweise auf einem Förderband oder einem Schiebetor befinden, dass entlang stromleitender Elemente bewegt wird. Ebenso kann der Generator ortsfest verankert werden, und beim Passieren eines oder mehrerer kontinuierlicher oder unterbrochener Elemente das bewegbar auf dem Generator angebrachte Halbach-Array gegen einen federnden Kraftspeicher vor- und zurück bewegen. Beispielsweise kann so ein Sensor zur Übermittlung eines Signals mit Strom gespeist werden, sobald ein metallisches Gegenelement den Generator passiert.

### HARR2)

Ebenso kann die Relativbewegung des stromleitenden Gegenelementes bei Verwendung eines federnden Kraftspeichers in einer Drehbewegung zum Generator erfolgen. Es kann sich bei dem Gegenelement beispielsweise um metallische Segmente oder Magneten auf einem rotierenden Rad handeln, wobei das gegen den federnden Kraftspeicher bewegbar auf dem Generator gelagerte Halbach-Array beim Passieren der Segmente vor- und zurückfedert. Dazu kann der Generator beispielsweise an der Gabel oder der Bremsvorrichtung eines Fahrrades angebracht sein.

### HARR3)

Eine erfindungsgemäße Vorrichtung sieht vor, dass ein Halbach-Element in Form eines ringförmigen Halbach-Array aufgebaut ist, so dass das Magnetfeld in Richtung der Rotationsachse des Ringes zur einen Seite verstärkt und zur anderen Seite abgeschwächt ist, im Gegensatz zum Halbach-Zylinder, wo eine Verstärkung bzw. Abschwächung auf der Außenseite bzw. Innenseite also in etwa orthogonal zu Rotationsachse des Zylinders vorliegt. Für einen erfindungsgemäßen Generator wird das ringförmige Halbach-Array mit der magnetisch verstärkten Seite in Richtung des Gegenelementes angebracht, welches rotierbar (beispielsweise als rotierendes Rad oder Fahrradfelge) aber auch linear (beispielsweise als Schiene) zum Generator bewegbar ausgebildet sein kann. Das ringförmige Halbach-Array wird erfindungsgemäß so zum Gegenelement angebracht, dass nur ein Teil des Umfangs des rotierbar gelagerten ringförmigen Halbach-Arrays in einer Wirkposition zur Ausbildung eines Wirbelstromes im Gegenelement steht, wodurch bei einer Bewegung des Gegenelementes das ringförmige Halbach-Array per Wirbelstromkopplung in Rotation versetzt wird.

Liegt der Ring auf vollem Umfang am Gegenelement wird die Drehbewegung des ringförmigen Halbach-Arrays und damit die Funktion der Vorrichtung durch gegenläufige Krafteinwirkung auf den Ring blockiert. Vorzugsweise liegt weniger als die Hälfte des Ringumfangs am Gegenelement an, um gegensätzliche verlustbehaftete Krafteinwirkung auf den Magnetring zu minimieren. Eine besonders günstige Ausgestaltung sieht den Aufbau als Kegelrad vor (Fig.12), so da hier die gegenläufigen Einflüsse durch größeren Abstand zum Gegenelement minimiert werden, ohne dass der Wirkabstand zum Gegenelement vergrößert ist.

### HARR4)

Anstelle eines ringförmigen Halbach-Arrays ist erfindungsgemäß auch eine kreisförmige Anordnung einzelner Halbach-Arrays auf einem Rotationskörper vorgesehen, die in Ihrer Wirkweise prinzipiell dem ringförmigen Halbach-Array entsprechen und kleine Lücken zwischen den einzelnen Halbach-Arrays aufweisen.

### HARR5)

Die einzelnen Halbach-Array Elemente können auch rotierbar auf dem Rotationskörper angebracht werden, so dass sie im Idealfall eine Ausrichtung in Bewegungsrichtung des Gegenelementes möglich ist.

**HARR6)** Weiterhin ist erfindungsgemäß eine Vorrichtung vorgesehen, bei der zumindest zwei physikalisch gekoppelte Segmente mit Halbach-Arrays oder diamagnetisch gestörten alternierenden Magnetreihen parallel oder annähernd parallel zur Bewegungsrichtung des Gegenelementes angebracht sind, wobei jeweils mindestens eines der Segmente über Wirbelstromkopplung mit dem Gegenelement über einen begrenzten Bereich bewegt wird, während mindestens ein weiteres Segment über die physikalische Kopplung in entgegengesetzter Richtung in größerem Abstand und somit ohne Wirbelstromkopplung zum Gegenelement bewegt wird. Bei Erreichen einer Endposition wird der Abstand zum Gegenelement vergrößert, so dass keine Wirbelstromkopplung mehr besteht, wobei gleichzeitig der Abstand des zweiten Segments zum Gegenelement so verkleinert wird, dass dieses in einer Wirkposition zur Ausbildung einer Wirbelstromkopplung mit dem Gegenelement steht.

Die Halbach Arrays dieser erfindungsgemäßen Vorrichtung sind in Richtung des Gegenelementes verstärkt.

### HARR7)

Aus dem deutschen Gebrauchsmuster DE202012007030U1 ist eine Vorrichtung zur berührungslosen Stromerzeugung bekannt, mit einer in wechselnder Polfolge am Gegenelement berührungslos anliegenden Folge von Magneten, wobei die Folge durch magnetische Wechselwirkung (Wirbelstromverzahnung) mit dem Gegenelement bewegbar ist. Im Rahmen der hier vorgestellten Erfindung ist auch ein solcher Aufbau vorgesehen, wobei anstelle von alternierenden Permanentmagneten eine oder mehrere in Richtung des Gegenelementes verstärkend wirkende Halbach-Arrays angebracht sind. Dieses bringt zusätzlich zur stärkeren Wirbelstromverzahnung mit dem Gegenelement den Vorteil, dass sich die auf der Rückseite vorliegenden abgeschwächten Magnetfelder der Magneten auf den gegenläufigen Kettenabschnitten nicht oder weniger stark beeinflussen und somit die Effizienz der Vorrichtung durch ausbleibende Wirbelstromverluste im Innenbereich ansteigt.

Anstelle von Halbach-Arrays können erfindungsgemäß auch durch diamagnetische Mäntel gestörte Halbach Arrays mit verstärktem Magnetfeld in Richtung des Gegenelements sowie durch diamagnetische Mäntel gestörte Magnetanordnungen, die in wechselnder Polfolge ohne Halbach-Ausrichtung aufgebaut sind, verwendet werden. Der diamagnetische Mantel ist auf der Ober- und Unterseite der Magnetanordnung angebracht und kann beispielsweise aus Bismuth Platten bestehen. Auf diese Weise werden die Feldlinien weiter zur Außenseite des Arrays und damit auch in Richtung des Gegenelements abgedrängt, so dass sich die Reichweite des für die Wirbelstromverzahnung mit dem Gegenelement verantwortlichen Magnetfeldes erhöht. Erfindungsgemäße Ausgestaltungen **HA-DIA.1 - HA-DIA.7)** gehen durch entsprechende diamagnetische Störung der in **HARR1 - HARR7)** beschriebenen Vorrichtungen aus diesen hervor und zeichnen sich durch die zusätzlich vergrößerte Reichweite der Magnetfelder ins Gegenelement aus. Eine Besonderheit stellt dabei **HA-DIA3** dar: Hier hat der diamagnetische Mantel eine Ringform, da das Halbach Array als Ringstruktur aufgebaut ist.

**SENS)** Eine erfindungsgemäße Ausgestaltung sieht vor, dass ein Sensor zur Erkennung von metallischen Gegenelementen zu verwenden ist, wobei sich ohne kostenaufwendigen Energiespeicher immer dann ein Erkennungssignal absenden lässt, sobald ein Gegenelement den Generator passiert.
Dieses wird dadurch ermöglicht, dass beim Passieren metallischer Gegenelemente ausreichender Größe ein Strom in der erfindungsgemäßen Vorrichtung erzeugt wird, der direkt zum Absenden eines Signals über den Funksender zu nutzen ist. Auf diese Weise wird die Erkennung von metallischen Gegenelementen in einfacher Weise durch das Einschalten des Funksenders und Absenden eines Signals direkt mit dem durch das Gegenelement erzeugten Strom realisiert.

Für alle beschriebenen Ausgestaltungen unter **HCIR1-HCIR7** sowie **HARR1-HARR7** und **SENS** ist die Verwendung starker Neodymmagneten für den Aufbau der Halbach Elemente vorteilhaft, da diese die derzeit stärksten mit Permanentmagneten erreichbaren Magnetfelder liefern und dementsprechend auch eine maximale Magnetstärke für Halbach-Arrays bedeuten. Die nachfolgend beschriebenen Ausgestaltungen unter **POS1-POS5** verbessern oder erleichtern die Montage einer erfindungsgemäßen Vorrichtung. Die unter **ELK1-ELK5** beschriebenen Ausgestaltungen steigern die Effizienz einer erfindungsgemäßen Vorrichtung in Verbindung mit einem angeschlossenen Verbraucher.

### POS1- POS5

Allen Ausgestaltungen ist gemein, dass sie innerhalb eines Gehäuses gekapselt werden können, wobei sich durch räumliche Annäherung ans metallische Gegenelement die Wirbelstromverzahnung verstärken und damit auch die Generatorleistung erhöhen lässt. Bei sehr kleinem Abstand bzw. bei Unregelmäßigkeiten am Gegenelement (ungleichmäßig rotierendes Rad) oder Bewegung des Magnetelements (z.B. bei Anbringung am Bremsarm einer Fahrrad-Felgenbremse) besteht die Gefahr, dass am Gehäuse Beschädigungen durch Schleifen am Gegenelement auftreten.

### POS1)

Mittels eines Aufklebers aus abriebfestem, gleitfähigem Material wie zB. ultrahochmolekularem Polyethylen lässt sich die Beschädigung durch Berührung vermeiden. Der Wechsel von Schutzaufklebern ist problemlos möglich, so dass insbesondere Vorrichtungen, die kurzzeitig das Gegenelement berühren besser gegen Abnutzung geschützt sind. Beispielsweise lässt sich eine als Fahrradlampe erfindungsgemäß ausgebildete Vorrichtung, so am Bremsarm einer Felgenbremse anbringen, dass ein Luftspalt zwischen Generatorgehäuse und Felge verbleibt, der jedoch beim Bremsen durch Bewegung des Bremsarms verschwindet, so dass das Gehäuse die Felge berührt und die Lampeneinheit durch dichteren Kontakt zum Gegenelement als Bremslicht besonders hell aufleuchtet. Durch Verwendung eines auswechselbaren abriebfesten Schutzaufklebers auf der dem Gegenelement zugewandten Generatorseite lässt sich die Bremslichtfunktionalität ohne Gefahr der Beschädigung des Gehäuses einfach und kostengünstig realisieren.

### POS1)

Mittels eines sichtbaren Indikators bzw. eines Aufdrucks auf der dem Gegenelement zugewandten Gehäuseseite des Generators lässt sich erreichen, dass ein möglicher Abrieb des Gehäuses frühzeitig erkannt bzw. vermieden wird.

Bei einer Berührung zwischen Gehäuse und Gegenelement wird zunächst der Indikator abgerieben und erlaubt eine entsprechend frühzeitige Erkennung und Nachjustierung bevor eine Beschädigung am Gehäuse auftritt. Somit lässt sich ein sehr dünnwandiges Gehäuse mit entsprechend höherer erzielter Generatorleitung verwenden, sofern eine regelmäßige manuelle Sichtkontrolle bzw. automatische sensorgestützte Kontrolle des Indikators erfolgt.

### POS2)

Die Generatorleistung hängt stark von der Ausrichtung des Magnetelements zum metallischen Gegenelement ab. Dabei ist entscheidend, dass die Lagerung des bewegbar gelagerten Magnetelements entsprechend der Bewegungsrichtung des Gegenelements erfolgt, so dass sich das Magnetelement in Mitnahmerichtung der Wirbelstromverzahnung ungewinkelt möglichst frei bewegen können sollte. Tangenten an die Bewegungsrichtung des Gegenelements und an die Bewegungsrichtung des Magnetelements sollten demnach möglichst parallel sein, um einen maximalen Wirkungsgrad zu erzielen. Erfindungsgemäß lässt sich dieses über eine frei drehbare Lagerung des Magnetelements realisieren unter Ausnutzung der Eigenschaft, dass bei Relativbewegung zwischen Gegenelement und Magnetelement ein minimales Trägheitsmoment und somit eine gleichlaufende Richtung vom Magnetelement zum Gegenelement angestrebt wird.

Eine frei drehbare Ausrichtung ist empfindlich gegenüber Erschütterungen, die temporär die optimale Ausrichtung des Magnetelementes verändern und somit leistungsmindernd wirken können. Dieses lässt sich mit Hilfe einer elektronischen Steuerung umgehen, die bei Erreichen einer optimalen Ausrichtung die freie Drehbarkeit beispielsweise über einen mechanischen oder elektromagnetischen Schalter verhindert und temporär nachregelt.

### POS3)

Weiterhin hängt die Generatorleistung stark vom Abstand zwischen Magnetelement und metallischen Gegenelement ab. Mit größer werdendem Abstand lässt die Wirbelstromverzahnung und entsprechend die Generatorleistung stark nach.

Eine automatische Einstellung des Abstands erleichtert die Montage des Gesamtsystems, da sich der Anwender nicht zusätzlich um die Abstandseinstellung kümmern muss.

Darüber hinaus ist es bei Systemen mit schwankendem Abstand zwischen Gegenelement und Magnetelement zur Vermeidung von Berührung von Generator und Gegenelement erforderlich, den Mindestabstand zwischen Generator und Gegenelement nicht zu unterschreiten. Somit liegt zu einem Großteil ein größerer Abstand zwischen Gegenelement und Generator/ Magnetelement mit entsprechend geringerer Generatorleistung vor. Mittels einer automatischen Abstandsmessung (mechanisch oder elektronisch) und Regulierung lässt sich der Abstand nahezu konstant halten, so dass die Generatorleistung erheblich steigt. Die Messung des Abstands kann mechanisch beispielsweise über ein Federelement erfolgen, dass ein Schleif- oder Rollenelement an das Gegenelement drückt und damit auch den verbundenen Generator mitbewegt oder über einen elektronischen Abstandssensor. Eine effiziente und einfache Abstandsmessung kann direkt über die Leistungsabgabe bzw. Spannung des Generators (äquivalent zur Drehzahl des Magnetrades) erfolgen:
Unter der Annahme, dass die Relativbewegung zwischen Generator (Magnetelement) und Gegenelement zumindest zeitweise annähernd konstant verläuft, ist die Schwankung des Abstandes direkt an der Änderung der Bewegungsgeschwindigkeit des Magnetelementes abzulesen. Beispielsweise verringert sich die Drehgeschwindigkeit eines per Wirbelstromverzahnung gekoppelten Magnetrades mit zunehmendem Abstand zum Gegenelement. Über einen Mikrocontroller ist die Geschwindigkeit des Magnetrades direkt aus der vom Generator abgegebenen Spannung abzulesen.

Eine erfindungsgemäße Vorrichtung sieht vor, dass der Abstand des Generators bzw. des Magnetelements zum Gegenelement über einen Steuermotor konstant gehalten wird, indem die abgegebene Spannung auf nahezu identischem Niveau gehalten wird. Um dieses zu erreichen wird bei einem detektierten Spannungsabfall direkt der Abstand zum Gegenelement über den Steuermotor verringert. Bei einem Anstieg der Generatorspannung wird entsprechend der Abstand wieder vergrößert, da eine zunehmende Spannung bedeutet, das sich Gegenelement und Generator annähern. Zur Absicherung bzw. zur Anpassung bei veränderten Relativgeschwindigkeiten wird eine minimale Abstandsposition zum Gegenelement fixiert, die idealerweise als Referenzposition verwendet wird: Diese Minimalposition darf nicht unterschritten werden und sofern die Minimalposition über einen Zeitraum nicht erreicht wird ist der Abstand entsprechend nach unten zu senken.

### POS4)

Der Abstand von Magnetelement und metallischem Gegenelement ist entscheidend für die Leistung des berührungslosen Generators. Eine präzise Justierung mittels genauer Ausrichtung am Rahmen oder Bremssystem anschraubbarer Adapter ist in der Regel schwierig. Eine nachträgliche Justierung über einen Schraubenmechanismus ist dagegen einfach und sehr präzise einstellbar.
Eine einfache Möglichkeit eine schraubbare Justierung des Generators zu realisieren besteht darin, einen Adapter mit schraubbarem leicht federndem Parallelogrammelement zu verwenden. Durch Anziehen der Verschraubung wird das Parallelogramm zusammengedrückt, so dass der Generator dichter ans Gegenelement rückt. Entsprechend entfernt sich der Generator beim Lösen der Verschraubung wieder vom Gegenelement.

### POS5)

Entscheidend für die Funktionalität berührungsloser Generatoren als Fahrradbeleuchtungsanlage ist die einfache und stabile Montage am Fahrrad. Da sich an gegenüberliegenden Felgenseiten anliegende Generatoren bezüglich der Leistung gegenseitig verstärken ist diese Art der Anbringung besonders vorteilhaft. Idealerweise werden Anschraubmöglichkeiten für Felgenbremsen genutzt, da diese eine festere Montage gegenüber Schellenbefestigungen ermöglichen. Die Montage an einem Fahrrad mit Seitenzugbremsen, wie sie bei den meisten Rennrädern verwendet werden ist gemäß Gebrauchsmuster DE202011107060U1einfach an der Verschraubung des Bremskörpers am Bremsarm vorzunehmen. Allerdings hat diese Art der Befestigung den Nachteil, dass ohne Verwendung eines besonderen Schutzes für das Generatorgehäuse ein relativ großer Abstand zur Felge einzuhalten ist, um das ansonsten auftretende Schleifen des Generatorgehäuses an der Felge beim Betätigen der Bremse zu verhindern: Beim Abbremsen wird der Bremsarm einer Seitenzugbremse in Richtung der Felge bewegt, um den Bremsklotz an die Felge zu bringen. Dadurch wird auch der am Bremsarm befestigte Generator näher an die Felge bewegt und kann diese bei nicht ausreichendem Zusatzabstand berühren. Um dieses zu verhindern muss der Abstand größer als die Wegstrecke des Bremsarms beim Bremsen (in der Regel 3-4mm) gewählt werden, was einen deutlichen Leistungsverlust gegenüber der Montage in minimalem Felgenabstand bedeutet.

Eine erfindungsgemäßer Adapter ermöglicht die Montage eines oder zweier Generatoren an den zwei Bremsarmen einer Seitenzugbremsen, ohne dass die Generatoren beim Abbremsen näher an die Felge bewegt werden. Somit wird eine deutlich höhere Generatorleistung gegenüber der Montage eines einzelnen Adapters an einem Bremsarm ermöglicht. Ein erfindungsgemäßer Adapter erreicht dies über einen Federmechanismus, wobei ein oberhalb des Rades verlaufendes Verbindungsstück zwischen den beiden Anschraubpositionen dem Zusammendrücken der Bremsarme entgegenwirkt. Trotzdem wird durch die Federung das Zusammendrücken der Bremsarme nur unwesentlich beeinflusst.

### Elektronik

**ELK1)** Aus der europäischen Patentanmeldung WO002014.015968A3 ist eine Vorrichtung bekannt, die die Effizienz eines berührungslosen Generators für eine LED-Beleuchtung durch geschwindigkeitsabhängige Umschaltung zwischen Reihen- und Parallelschaltung der Windungen bifilarer oder n-filarer Wicklungen gleichsinniger Orientierung steigert.

Hierzu wird bei niedriger Geschwindigkeit bzw. niedriger Generatorleistung eine Reihenschaltung aneinanderliegender Einzelwicklungen verwendet, während bei höherer Generatorleistung automatisch auf Parallelschaltung der aneinanderliegenden Einzelwicklungen gewechselt wird. Der Vorteil ergibt sich daraus, dass eine Reihenschaltung aneinanderliegender Einzelwicklungen einem kleinen Drahtquerschnitt und eine Parallelschaltung einem größeren Drahtquerschnitt entspricht.

Eine Spulenwicklung des Generators mit geringem Drahtdurchmesser erlaubt im Vergleich zu größeren Drahtdurchmesser Draht erheblich mehr Windungen auf gleichem Raum, so dass eine entsprechend größere Spannung induziert wird. Die für eine LED Beleuchtung nötige Mindestspannung kann so bereits bei vergleichsweise niedriger Geschwindigkeit erreicht werden. Durch den größeren Spuleninnenwiderstand gegenüber der Verwendung eines größeren Drahtdurchmessers wird allerdings ein vergleichsweise schlechterer Wirkungsgrad erzielt.

Eine erfindungsgemäße Vorrichtung sieht vor, dass anstelle einer umschaltbaren Reihen- / Parallelschaltung eine feste Reihenschaltung aneinanderliegender Einzelwicklungen verwendet wird. Dazu wird das Ende einer Wicklung mit dem Anfang einer weiteren Wicklung verbunden. Gegenüber der umschaltbaren Anordnung der Wicklungen ergibt sich der Vorteil, dass der Aufwand für die Messung der Generatorleistung und für die Umschaltung der Wicklungen entfällt, so dass die Produktionskosten erheblich sinken. Außerdem werden verlustbehaftete Schaltprozesse vermieden.

Gegenüber der Verwendung einer Einfachwicklung mit gleichem Drahtquerschnitt ergibt sich bei der Reihenschaltung der bifilaren (bzw. n-filaren) Wicklung aneinanderliegender Einzelwicklungen ein geringerer induktiver Blindwiderstand, durch abgeschwächte induktive Kopplung der aneinanderliegenden Einzelwindungen. Bei gleicher Induktivität ist dies gleichbedeutend mit einem höheren Wirkungsgrad bzw. einer höheren Generatorleistung. Allein durch veränderte Spulenwicklung lässt sich somit der Wirkungsgrad und entsprechend die abgegebene Leistung des Generators erhöhen, ohne zusätzliches Material bzw. Baugröße oder Gewicht einzusetzen.

### ELK2)

In manchen Fällen kann es vorteilhaft sein, die Generatorleistung kurzfristig zu erhöhen, beispielsweise um ein Blinklicht mit größerer Helligkeit zu betreiben als im Dauerlichtmodus möglich wäre, oder genügend Energie zum Absenden eines Funksignals abzusenden. Ebenso ist es vorteilhaft, bei dauerhaftem Unterschreiten der Mindestleistung zum Erreichen der Durchbruchspannung einer LED-Beleuchtung durch kurzfristig erhöhte Leistungsabgabe des Generators eine ausreichende Spannung für einzelne Lichtsignale für ein Blinklicht zu erreichen.
Dies ist bei einer erfindungsgemäßen Vorrichtung durch intervallartiges Ein- und Ausschalten des Verbrauchers möglich, beispielsweise durch Ein- und Ausschalten der Beleuchtungseinheit im Fall einer Fahrradbeleuchtung.

Sofern der berührungslose Generator eingeschaltet also unter Last betrieben wird, reduziert sich die Relativgeschwindigkeit des bewegbar gelagerten Magnetelements, beispielsweise die Rotationsgeschwindigkeit eines rotierenden Magnetringes gegenüber einer Fahrradfelge. Wird der Verbraucher ausgeschaltet erhöht sich die Geschwindigkeit des Magnetelements entsprechend der Geschwindigkeit des metallischen Gegenelements.

Die somit höher beschleunigte Masse des Magnetelements sorgt beim Einschalten des Verbrauchers für eine zunächst erhöhte Stromabgabe bzw. erhöhte Spannung des Generators, die im folgenden Abbremsprozess wieder abfällt. Die kurzfristig erhöhte Leistung kann zum Absenden eines Signals (z.B. ein Sendesignal eines Sensors oder Aufleuchten einer LED Beleuchtung) genutzt werden, für das im Dauerbetrieb keine ausreichende Leistung bereitstehen würde.
Die Umschaltung kann leistungsabhängig über einen Mikrocontroller erfolgen oder auch dauerhaft beispielsweise über eine astabile Kippstufe betrieben werden.

### ELK3)

Eine erfindungsgemäße Vorrichtung, die mithilfe eines Schaltelements wie einem stromsparenden Mikrocontroller betrieben wird benötigt eine Stromversorgung für das Schaltelement/ den Mikrocontroller. Beispielanwendungen sind die leistungsabhängige Umschaltung zwischen Reihen- und Parallelschaltung einer bifilaren Spulenwicklung (ELK1), die leistungsabhängige Blinkschaltung (ELK2), die automatische Abstandsanpassung zwischen Gegenelement und Generator (ELK4) sowie die hocheffiziente Wechselstrom-Standlichtschaltung (ELK5). Dazu ist eine galvanische Trennung zwischen Schalt- und Laststromkreis hilfreich, jedoch kann der Wirkungsgrad durch den Aufwand für die elektronische Trennung (üblicherweise über einen Transformator) erheblich sinken. Zudem ist in der Regel eine zusätzliche verlustbehaftete Schaltung zur Erhöhung der vom Generator gelieferten Spannung erforderlich, um das Schaltelement/ den Mikrocontroller bereits bei sehr geringer Spannung verwenden zu können, wie es für eine leistungsabhängige Blinkschaltung (ELK2) erforderlich ist. Eine effiziente Möglichkeit, den Mikrocontroller über einen galvanisch getrennten Stromkreis zu versorgen, besteht in der Verwendung mindestens eines separaten Spulenelements, das ebenso im Wirkbereich des über Wirbelstromverzahnung mit dem Gegenelement bewegbaren Magnetelements angebracht wird und für das idealerweise ein sehr dünner Draht verwendet wird. Die Windungszahl ist so zu wählen, dass die erforderliche Mindestspannung zum Betrieb des Mikrocontrollers bereits bei sehr niedriger Relativgeschwindigkeit zwischen metallischem Gegenelement und Magnetelement erreicht wird.

Bei einem Generatoraufbau mit rotierendem Magnetelement, das von einer Luftspule vollständig in Parallelrichtung zum Gegenelement umgeben wird, wird das zusätzliche Spulenelement idealerweise auf der dem Gegenelement gegenüberliegenden verbliebenen freien Rückseite angebracht. Bei Verwendung eines Magnetrades mit sechs nach außen wirksamen alternierenden Magnetfeldern umgibt das Hauptspulenelement für den Laststrom vorzugsweise zwei gegenüberliegende gegensätzliche Magnetfelder, während das zusätzliche Spulenelement außerhalb an zwei benachbarten gegensätzlichen Magnetfeldern an der Rückseite anliegt.

### ELK4)

Die in WO002014015968A beschriebene Umschaltung zwischen Reihen- und Parallelschaltung einer erfindungsgemäßen Vorrichtung erfolgt im Fall einer hocheffizienten Beleuchtungsschaltung mit Standlicht idealerweise über antiseriell geschaltete Doppel-Mosfet Schalter. Hierzu werden mehrere Schalter benötigt, wobei ein galvanisch getrennter Mikrocontroller zu verwenden ist. Zur Vermeidung von Transformationsverlusten für die galvanische Trennung wird auch hier idealerweise eine zusätzliche separate Spulenwicklung für den Mikrocontroller eingesetzt.

### ELK5)

Um maximale Effizienz einer von einem Wechselstromgenerator gespeisten LED-Beleuchtung zu erreichen, ist eine Antiparallelschaltung von 2 LEDs vorteilhaft. Hierdurch wird die verlustbehaftete Gleichrichtung des Wechselstroms umgangen. Diese Verluste können gerade bei kleinen Strömen und Spannungen durch Spannungsabfall über den Gleichrichterdioden bis zu 50% Wirkungsgradverlust bedeuten.

Zur Realisierung einer Standlichtfunktion für einen Wechselstromgenerator wird üblicherweise ein Gleichrichter sowie ein als Energiespeicher eingesetzter Speicherkondensator (alternativ ein Akkumulator) eingesetzt. Die Gleichrichtung ist erforderlich, um den Kondensator aufzuladen, so dass auch hier große Gleichrichtungsverluste auftreten.

Eine erfindungsgemäße Vorrichtung sieht vor, dass eine Antiparallelschaltung der LEDs verwendet wird, wobei zum Laden des Kondensators lediglich eine Halbwelle des erzeugten Wechselstromes verwendet wird während die weitere LED in dieser Zeit ausgeschaltet wird. Idealerweise erfolgt dies über zwei antiseriell geschaltete Mosfets (einfache Mosfets sind lediglich zur Schaltung eines Gleichstroms geeignet), die über einen Mikrocontroller geschaltet werden und einen Wirkungsgrad von annähernd 100% aufweisen. Dies hat zum einen den Vorteil, dass zur Ladung des Kondensators keine verlustbehaftete Gleichrichterschaltung zu verwenden ist, zum anderen ist während des Ladeprozesses die Beleuchtung über die antiparallel geschaltete LED weiterhin gewährleistet. Die Entladung des Kondensators erfolgt über Pulsweitenmodulation, wobei idealerweise wiederum antiseriell geschaltete Mosfets verwendet werden. Insgesamt werden somit niedrige Schaltfrequenzen im Entladeprozess mit entsprechend niedrigem Strombedarf realisiert. Durch die extrem niedrigen Verluste der Mosfet-Schalter ergibt sich ein Wirkungsgrad von annähernd 100 % bezogen auf die vom Generator an die LEDs abgegebene Leistung.

Wesentlich für den Aufbau einer Wechselstromschaltung mit verschiedenen Doppel-Mosfet- Schaltern (6d) ist die galvanische Trennung vom Mikrocontroller (6c). Wird die galvanische Trennung über einen Transformator realisiert ergeben sich allerdings deutliche Verluste. Eine nahezu verlustfreie galvanisch getrennte Versorgung des Mikrocontrollers ergibt sich durch die Verwendung eines zusätzlichen separaten Spulenelements, das idealerweise am gleichen Magnetelement angeordnet ist. Eine nahezu verlustfreie Blinkschaltung im Standmodus ist ebenso möglich, wenn bei der Entladung des Kondensators die Pulsweitenmodulation so eingestellt wird, dass die Ein- und Ausschaltphasen lang genug zur Wahrnehmung eines Blinksignals gewählt werden.

Weitere Vorteile und Einzelheiten der Erfindung sind der nachfolgenden Figurenbeschreibung zu entnehmen. In den schematischen Abbildungen der Figuren zeigt:
- Fig. 1-2: eine perspektivische Ansicht einer erfindungsgemäßen Vorrichtung
- Fig. 3: eine perspektivische Teilansicht einer erfindungsgemäßen Vorrichtung
- Fig. 4: eine Prinzipskizze eines Teils einer aus dem Stand der Technik bekannten Vorrichtung sowie eines Teils einer erfindungsgemäßen Vorrichtung
- Fig. 5: eine weitere perspektivische Ansicht einer erfindungsgemäßen Vorrichtung
- Fig. 6: eine Prinzipskizze eines Teils einer erfindungsgemäßen Vorrichtung
- Fig. 7: eine Prinzipskizze eines Teils einer aus dem Stand der Technik bekannten Vorrichtung
- Fig. 8-30: perspektivische Ansichten weiterer erfindungsgemäßer Vorrichtungen
- Fig. 31-35: Prinzipskizzen der Elektronik erfindungsgemäßer Vorrichtungen
- Fig. 36-39: weitere perspektivische Ansichten erfindungsgemäßer Vorrichtungen

Gleich oder ähnlich wirkende Teile sind - sofern dienlich - mit identischen Bezugsziffern versehen. Einzelne technische Merkmale der nachfolgend beschriebenen Ausführungsbeispiele können auch mit den Merkmalen der vorbeschriebenen Ausführungsbeispiele zu erfindungsgemäßen Weiterbildungen führen.

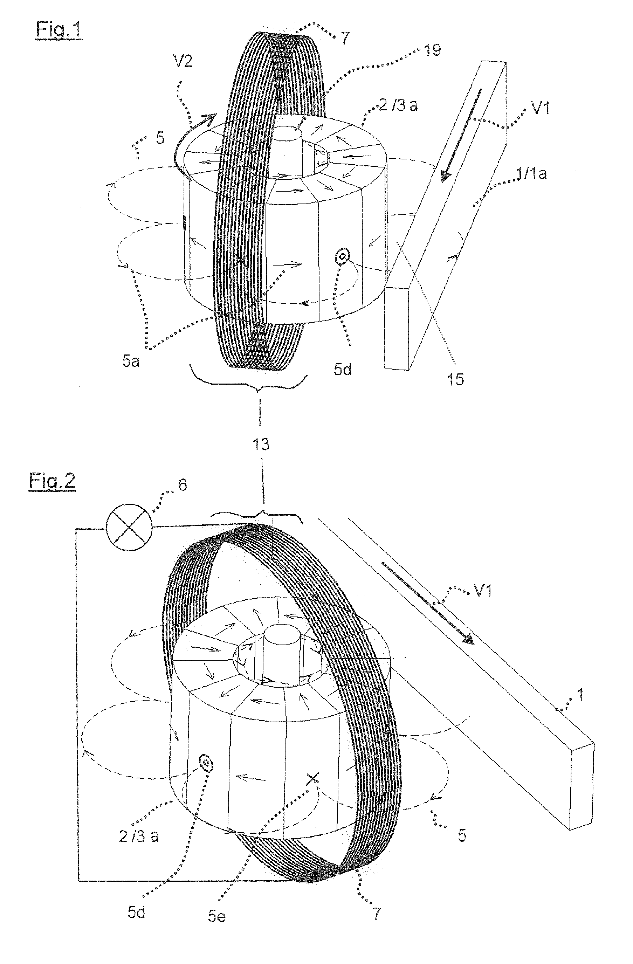

Figur 1 zeigt eine erfindungsgemäß Vorrichtung. Das metallische Gegenelement (1) wird in Richtung V1 über einen Luftspalt (15) beabstandet am Magnetelement (2) entlangbewegt. Das Magnetelement (2) ist in Form eines Halbach- Zylinders (3) mit nach außen verstärktem Magnetfeld (5) aufgebaut und ist auf einer Achse (19) rotierbar gelagert. Die Magnetfeldrichtung (5a) verläuft in Pfeilrichtung von Südpol (5e) zu Nordpol (5d). Durch die Bewegung des Gegenelements (1) werden in diesem durch die durchdringenden Magnetfelder des Magnetelementes (2) Wirbelströme induziert, deren Magnetfelder sich von den Magnetfeldern (5) des Magnetelementes (2) abstoßen und dieses in Form einer Wirbelstromverzahnung entsprechend in Drehbewegung V2 versetzen.
Durch die Drehung des Halbach Zylinders werden dessen Magnetfelder senkrecht durch die umgebende Spule (7) bewegt in der somit ein Wechselstrom induzierbar ist.

In Figur 2 ist ein zusätzlicher an die Spule (7) angeschlossener Verbraucher (6) wie beispielsweise eine in Antiparallelschaltung betriebene LED Beleuchtung dargestellt, der mittels des in die Spule (7) induzierten Wechselstromes versorgt wird.

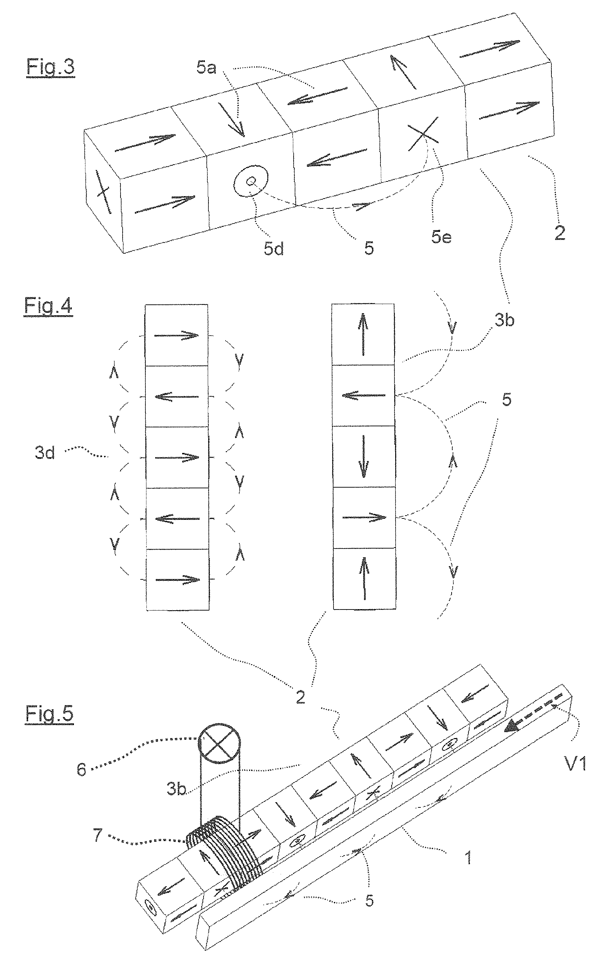

Figur 3 zeigt ein Magnetelement (2) bestehend aus 5 Würfelmagneten (2a) in Form eines Halbach-Arrays (3b) mit einem zu einer Seite verstärktem Magnetfeld (5). Feldlinien (5a) verlaufen in Süd-Nord-Ausrichtung. Je zwei Magnete sind seitlich in Richtung eines Nordpols (5d) bzw. von einem Südpol (5e) abweisend gekippt.

In Figur 4 wird links ein einfache Magnetreihe aus alternierenden Permanentmagneten (3d), sowie auf der rechten Seite ein entsprechendes Halbach Array (3b) gleicher Größe gezeigt. Während die Feldlinien der alternierenden Formation beidseitig gleich stark ausgebildet sind, verschwinden die Feldlinien des Halbach-Arrays (3b) auf der Seite der von Südpolen abweisend gekippten Nordpole nahezu, während sich die Feldlinien (5) auf der Seite der den Nordpolen zugewandt gekippten Nordpole gegenüber der alternierenden Magnetformation nahezu verdoppeln.

Figur 5 zeigt einen Teil einer erfindungsgemäßen Vorrichtung. Eine stromleitendes Gegenelement (1) bewegt sich längsseitig beabstandet entlang der magnetisch verstärkten Seite eines Halbach Arrays (3b) in Richtung V1. Hierdurch werden im Gegenelement (1) entsprechend der einseitig in Richtung des Gegenelements verstärkten Magnetfelder des Halbach Arrays Wirbelströme im stromleitenden Gegenelement induziert, deren resultierende Magnetfelder bei Bewegung eine Wirbelstromverzahnung zwischen Magnetelement (2) und Gegenelement (1) herstellen. Über die Wirbelstromverzahnung wird berührungslos eine Kraft in Richtung V1 auf das Magnetelement (2) ausgeübt, die mittels einer anliegenden Spule (7) durch Wechselstrominduktion über die Magnetfelder (5) der Magneten des Magnetelements (2) mit einem angeschlossenen Verbraucher (6) genutzt werden kann.

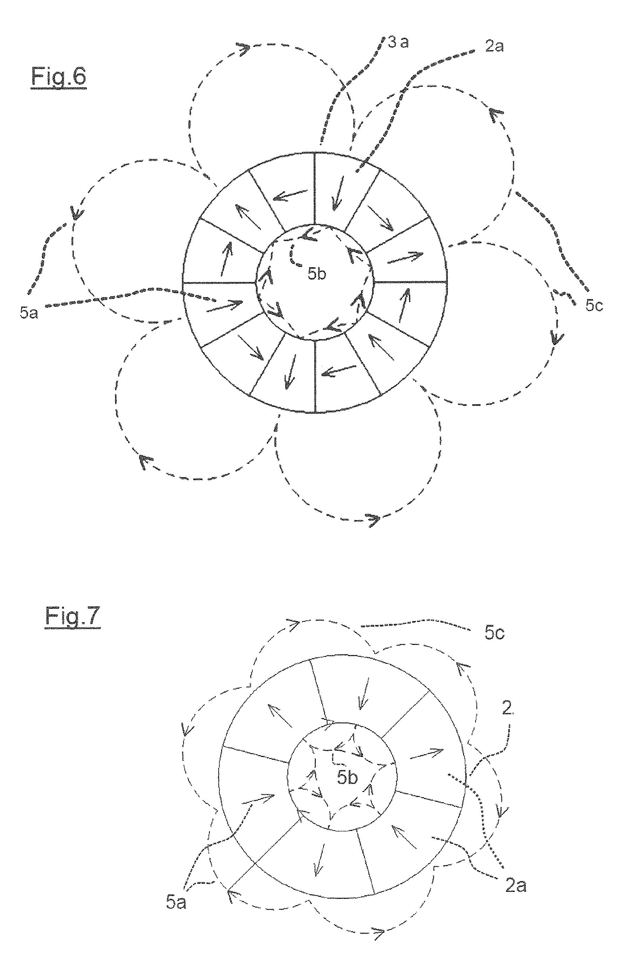

Figur 6 zeigt eine Draufsicht eines Halbach Zylinders (3) bestehend aus 12 Einzelmagneten (2a) mit nach außen verstärktem Magnetfeld (5c) und im Inneren nahezu ausgelöschten Magnetfeld (5b). Magnetfeldrichtungen (5a) verlaufen in Pfeilrichtung von Süd nach Nord. Je zwei Segmentmagnete sind seitlich in Nordrichtung zu einem Magnet mit Nordpol an der Außenseite gekippt und stören so dessen Magnetfeld. Entsprechend sind je zwei Magnete mit Ihren Nordpolen abweisend von Magneten mit Südpolen auf der Außenseite gekippt, so dass die Magnetfelder auf der Außenseite nahezu verdoppelt sind. Anordnungen mit ganzzahligen Vielfachen von 4 sind ebenso möglich, jedoch stellt eine Anordnung aus 12 Magneten eine sehr günstige Anordnung dar, da sich so gegensätzliche Magnetfelder gegenüberliegen und bei erfindungsgemäßer Drehbewegung innerhalb eines umgebenden Spulenelementes zur Induzierung eines Wechselstroms geeignet sind.

Figur 7 zeigt eine Draufsicht eines einfachen Magnetzylinders mit alternierenden Magneten (2a) bezgl. Nord-Süd Ausrichtung zur Außenseite, wie er aus dem Stand der Technik für berührungslose Generatoren bekannt ist. Die Anordnung mit 6 alternierenden Magneten entspricht in der Orientierung der Magnetfelder der Orientierung des Halbach Zylinders, jedoch sind hier die Magnetfelder im Inneren (5b) in etwa so stark wie die Magnetfelder auf der Außenseite (5c). Neben einer schwächeren Wirbelstromverzahnung mit einem metallischen Gegenelement und einer geringeren Strominduktion in eine Spule hat dies den zusätzlichen Nachteil, dass die Magnetfelder im Inneren eine metallische Lagerung stören und nur durch aufwendige (teure) nicht stromleitende Lagerungen wie z.B. Keramiklager ohne leistungsmindernde Abbremsung durch Wirbelstrommagnetfelder auskommen.

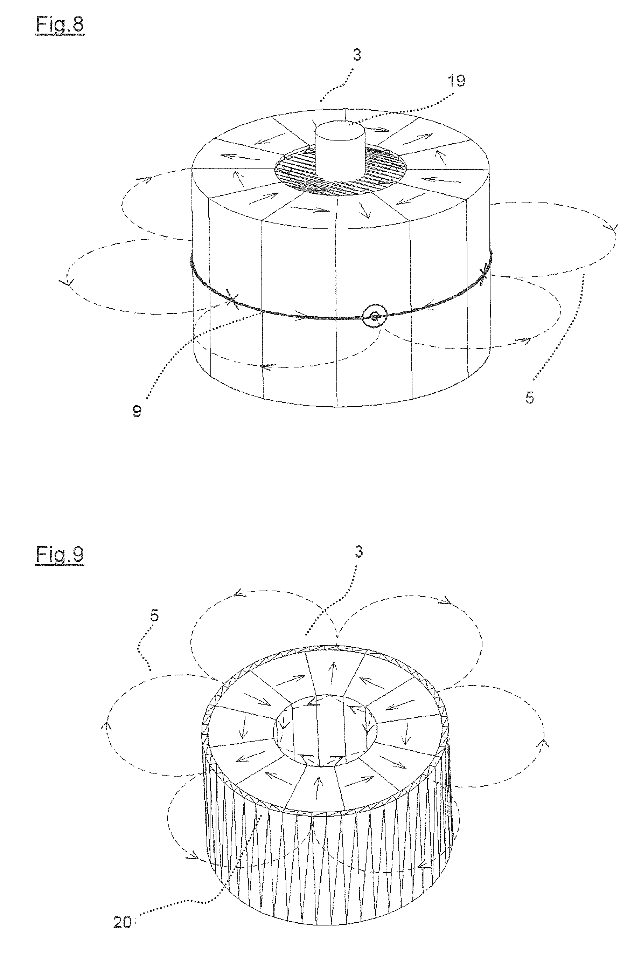

In Figur 8 wird ein Halbach Zylinder (3) mit einer umspannenden reißfesten Faser (9) gezeigt. Da die Montage der Halbach Anordnung wegen der der Anordnung widerstrebenden Magnetkräfte schwierig ist, wird bei den sonst üblichen Halbach Anordnungen mit auf der Innenseite verstärktem Magnetfeld zumeist ein äußerer Mantel zur Fixierung verwendet. Dieser ist im Falle eines berührungslosen Generators nachteilig, da dies einen geringeren effektiven Luft-Abstand zum Gegenelement bedeutet. Außerdem ist eine Hülle (20) zur Fixierung auf der Außenseite, wie in Figur 9 dargestellt aus Kostengründen zumeist aus Metall gefertigt und beeinträchtigt das leistungsrelevante Magnetfeld auf der Außenseite. Wird in den Magneten des Halbach Zylinders (3) in Höhe der Faser eine Rille eingelassen, so wird der tatsächliche Luftspalt um die Dicke der Faser (9) verringert, was für eine berührungslose Montage mit größtmöglichem Abstand ohne Leistungsverlust von zusätzlichem Vorteil ist.

Figur 10, 11 und 12 zeigen perspektivische Ansichten eines Magnetringes(2), der als ringförmiges Halbach Array aufgebaut ist. Die Magnetsegmente (2a) des Ringes sind entsprechend eines Halbach Arrays aufgebaut und lediglich gekrümmt, so dass sich ein Kreis ergibt. Anders als beim Halbach Zylinder sind keine Nord- oder Südpole zur Innen- oder Außenseite ausgerichtet, sondern seitlich in Richtung der Rotationsachse des Ringes. Seitlich gekippte Magneten (2a) zeigen gemäß einer Halbach Anordnung jeweils mit Ihren Nord- bzw.- Südpolen in Richtung eines in Rotationsachsenrichtung ausgerichteten Magneten. Auf diese Weise wird das Magnetfeld (5) auf der Seite Nordpole (5d), auf die seitlich in Nordpolrichtung gekippte Magneten ausgerichtet sind, nahezu verdoppelt und verschwindet annähernd auf der abgewandten Seite. Ein metallisches Gegenelement (1), das auf der Seite der Nordpolausrichtung den Magnetring (2) passiert, wird von den magnetisch gestörten bzw. verstärkten Magnetfeldern (5) des Magnetringes durchdrungen. Somit wird bei Relativbewegung zwischen Magnetring (2) und Gegenelement (1) eine Wirbelstromverzahnung erreicht, die sich mittels einer den Magnetring umgebenden oder anliegenden Spule zur Erzeugung eines Wechselstromes nutzen lässt. Figur 12 zeigt die Ausprägung des Halbach Rings als Kegelrad.

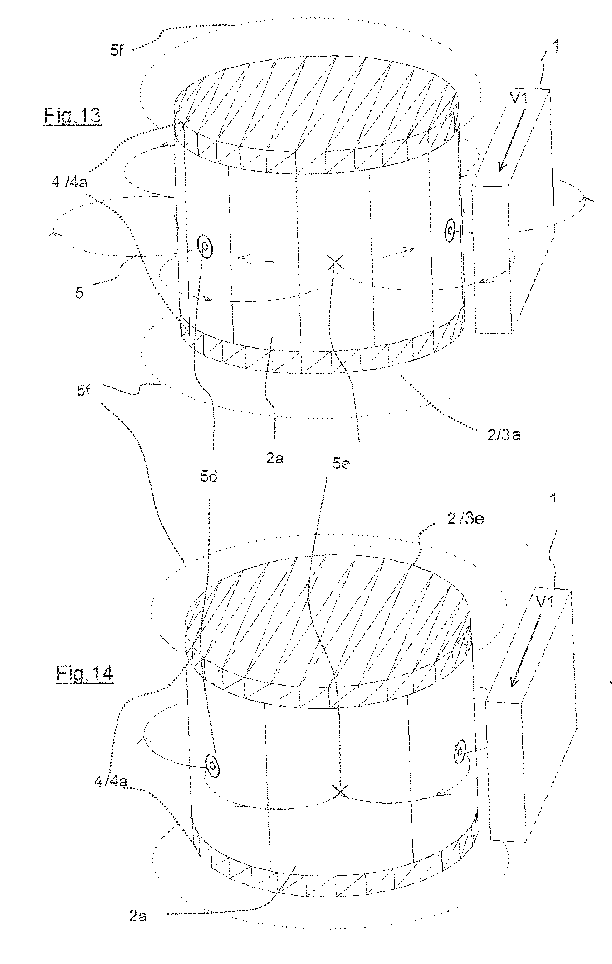

Figur 13 und Figur 14 zeigen erfindungsgemäße Vorrichtungen, bei denen das Magnetelement (2) in Form eines Zylinders aufgebaut ist, der an der Ober- und Unterseite von einer diamagnetischen Platte (4) abgedeckt wird. In Figur 13 ist das Magnetelement (2) ein Halbach Zylinder (3), während in Figur 14 ein Zylinder aus alternierenden Permanentmagneten, wie sie aus dem Stand der Technik für berührungslose Generatoren bekannt sind, gezeigt wird. Die diamagnetische Platte (beispielsweise aus Bismuth) verdrängt die Magnetfelder (5f) an der Oberseite und Unterseite der Zylinderanordnungen (2) aus Ihrem Inneren und sorgt somit dafür, dass an der Kante zwischen Oberseite (bzw. Unterseite) und Außenseite des Zylinders Magnetfelder weiter nach außen abgedrängt werden. Somit wird bei Relativbewegung zu einem seitlich entlangbewegten Gegenelement, dieses von den weiter reichenden Magnetfeldern (5f) des Magnetzylinders (2) tiefer durchdrungen und eine stärkere Wirbelstromverzahnung wie auch eine größere Induktionswirkung in eine anliegende oder umlaufende Spule erreicht. Auf diese Weise wird sowohl für den Halbach Zylinder (3a) wie auch für den Magnetzylinder aus alternierenden Magneten (3e) eine stärkere Gesamtleistung bei nur geringem Zusatzgewicht bzw. Baugröße der Vorrichtung ermöglicht.

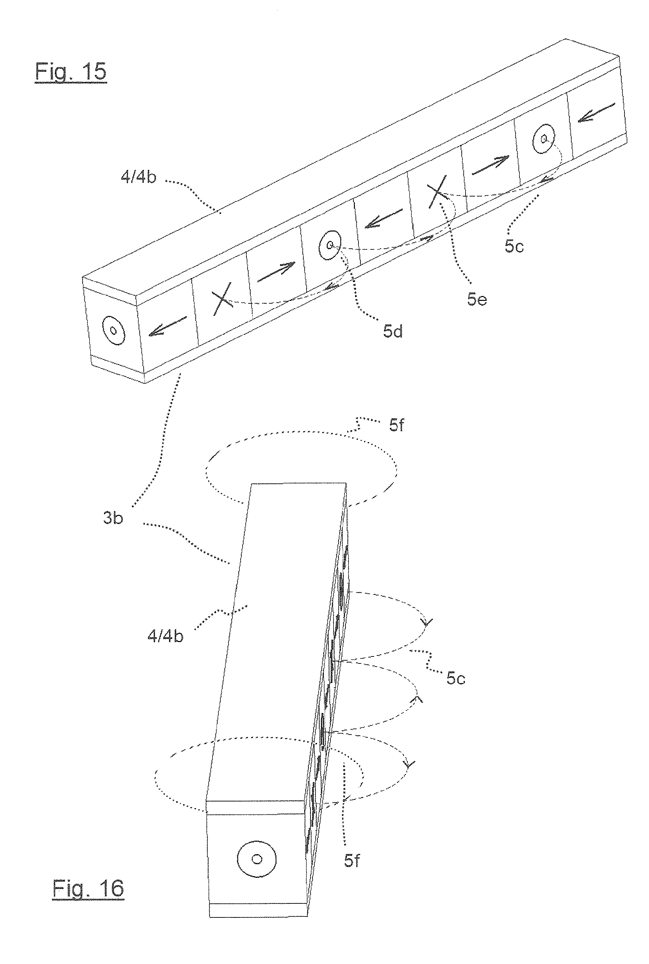

Figur 15 und 16 zeigen Halbach Arrays, die an Ober- und Unterseite mit einer diamagnetischen Platte (4b) abgedeckt sind. Genau wie beim Halbach Zylinder werden Magnetfelder an der Ober- und Unterseite durch die diamagnetische Störung weiter nach außen abgelenkt und verbessern entsprechend die Wirbelstromverzahnung einer erfindungsgemäßen Vorrichtung mit einem metallischen Gegenelement (1). Eine nicht dargestellte Abdeckung einer entsprechenden ungestörten Magnetanordnung aus eine Reihe alternierender Magneten wird in gleicher Weise bzgl. einer Wirbelstromverzahnung verstärkt.

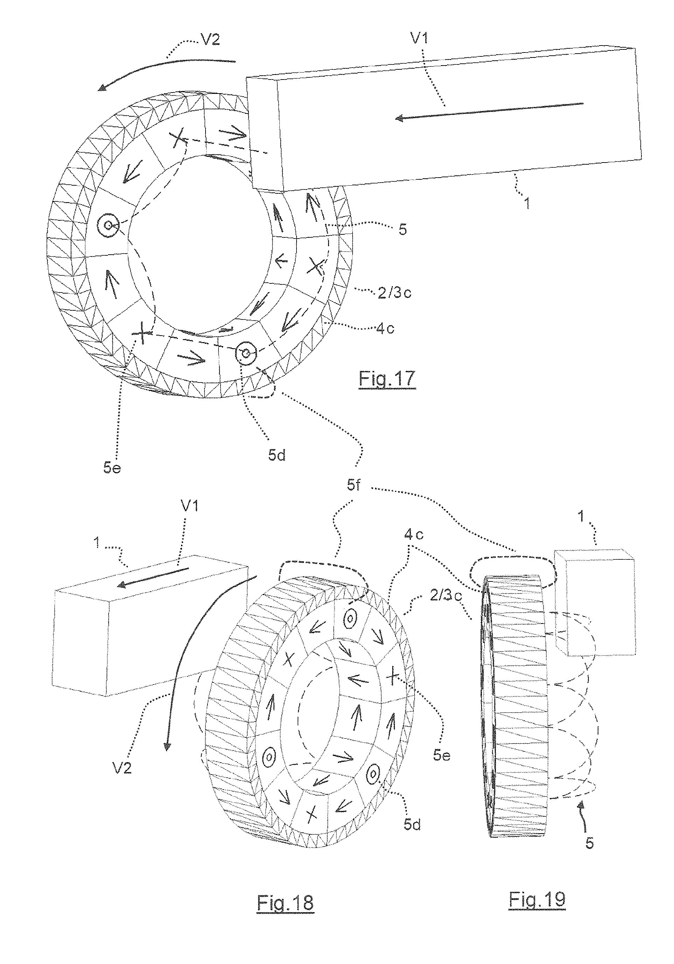

In Figur 17, 18 und 19 werden ringförmige Halbach Arrays (3c) gezeigt, die an der Zylinderaußenseite durch einen diamagnetischen Außenring (4c) eingefasst sind. Durch die diamagnetische Störung durch den Außenring (4c) werden an der Kante zwischen linker und rechter Seite zur Außenseite des Zylinders Magnetfelder (5f) weiter nach außen abgedrängt. Somit wird bei Relativbewegung zu einem seitlich entlangbewegten Gegenelement (1), dieses von den weiter reichenden Magnetfeldern (5f) des ringförmigen Halbach Arrays (3b) tiefer durchdrungen und eine stärkere Wirbelstromverzahnung wie auch eine größere Induktionswirkung in eine anliegende oder umlaufende Spule erreicht.

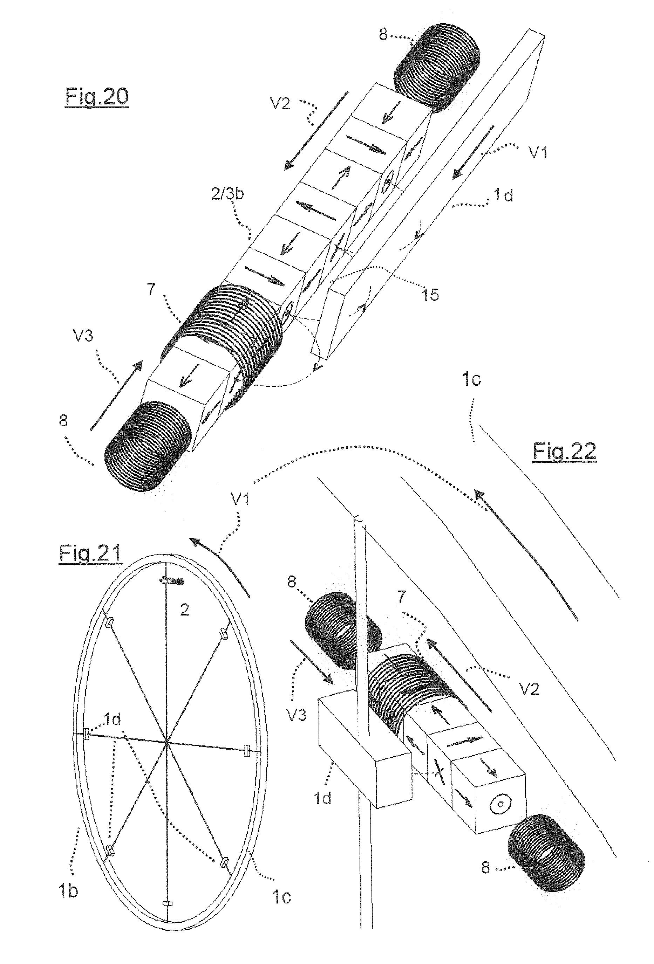

In Figur 20, 21 und 22 wird ein Magnetelement (2) (beispielhafterweise in Form eines Halbach Arrays (3b)) gezeigt, das gegen einen Kraftspeicher in Form einer Feder (8) bewegbar ist.

Bei Bewegung des über einen Luftspalt (15) beabstandeten metallischen Gegenelements (1d) in Richtung V1 wird das Magnetelement (2) durch Wirbelstromverzahnung in Richtung V2 gegen den Kraftspeicher (8) bewegt. Das hier gezeigte Federelement (8) wird dadurch zusammengedrückt. Nach Passieren des Gegenelements (1d) wird die Wirbelstromverzahnung bis zum Auftreten eines weiteren Gegenelements (1d) unterbrochen, und die Feder (8) entspannt sich und bewegt das Magnetelement (2/3b) in Richtung V3 zurück.

Durch die alternierende Bewegung des Halbach Arrays in Richtung V2 und V3 wird in der umgebenden Spule (7) ein Wechselstrom induziert, der zur Versorgung eines Verbrauchers nutzbar ist. In Figur 21 und 22 werden metallische Gegenelemente (1d) gezeigt, die an den Speichen eines Rades (1b) befestigt sind, dass bei Rotation in Richtung V1 einen Generator betreibt, der beispielsweise an einer Gabel befestigt ist und ein entsprechend gegen einen Kraftspeicher (8) bewegbares Halbach Array aufweist.

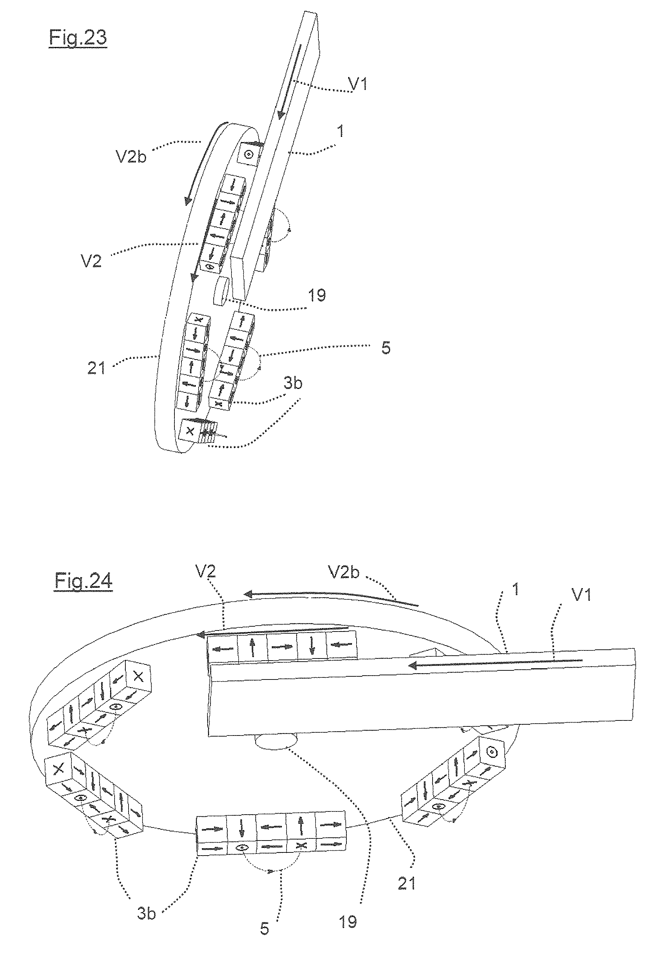

Figur 23 und 24 zeigen eine erfindungsgemäße Vorrichtung, bei der Magnetelemente in Form von Halbach Arrays (3b) auf einer Scheibe (21) angebracht sind, die auf einer Achse (19) rotiert. Die Magnetfelder (5) der Halbach Arrays (3b) sind in Richtung eines seitlich passierenden unterbrochenen oder durchgängigen Gegenelements (1) verstärkt. Bei Bewegung des Gegenelements in Richtung V1 wird das jeweils anliegende Halbach Array in Richtung V2 per Wirbelstromverzahnung mitbewegt, was in einer Drehbewegung V2b der verbundenen Scheibe (21) resultiert. Spulenelemente lassen sich nahe an den Halbach Arrays zur Induzierung eines Wechselstromes anbringen.

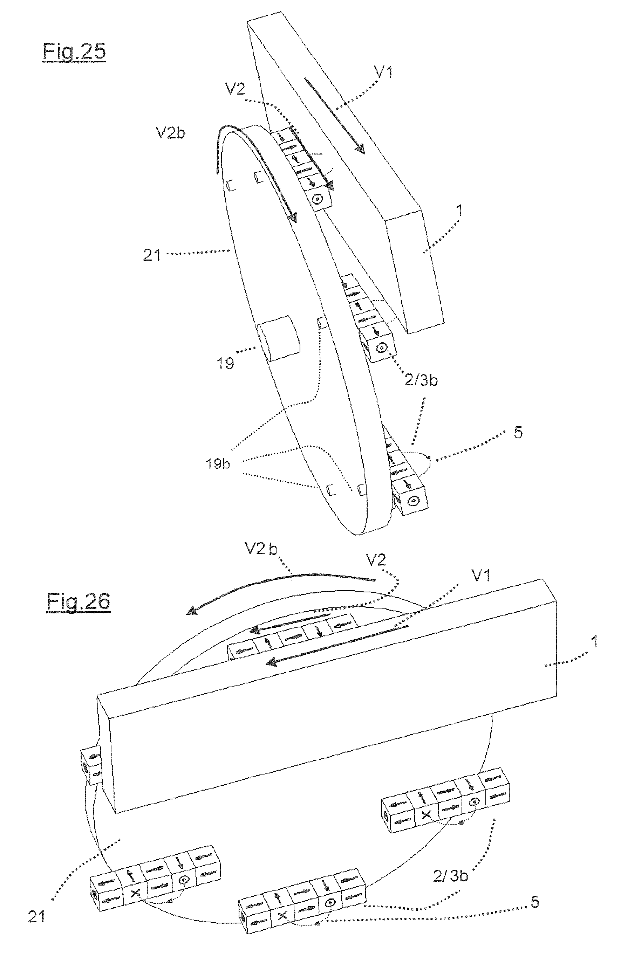

Wie auch in Figur 23 und 24 zeigen Figur 25 und 26 eine erfindungsgemäße Vorrichtung, bei der Magnetelemente in Form von Halbach Arrays (3b) auf einer Scheibe (21) angebracht sind, die auf einer Achse (19) rotiert. Die Magnetfelder (5) der Halbach Arrays (3b) sind wiederum in Richtung eines seitlich passierenden unterbrochenen oder durchgängigen Gegenelements (1) verstärkt.
Im Gegensatz zur festen Fixierung der Magnetelemente (2/3b) auf der Scheibe sind diese auf der Scheibe auf einzelnen Achsen (19b) rotierbar angebracht- idealerweise, so dass sie dauerhaft in Bewegungsrichtung V1 ausgerichtet sind. Gegenüber der Anordnung in Figur 23/24 wird ein höherer Wirkungsgrad erreicht, da sich die einzelnen Magnetelemente auf dem kompletten Kreisbogen parallel zur Bewegungsrichtung V1 und nicht winklig dazu mitbewegen.

Bei Bewegung des Gegenelements in Richtung V1 wird das jeweils anliegende Halbach Array in Richtung per Wirbelstromverzahnung V2 mitbewegt, was in einer Drehbewegung V2b der verbundenen Scheibe (21) resultiert.

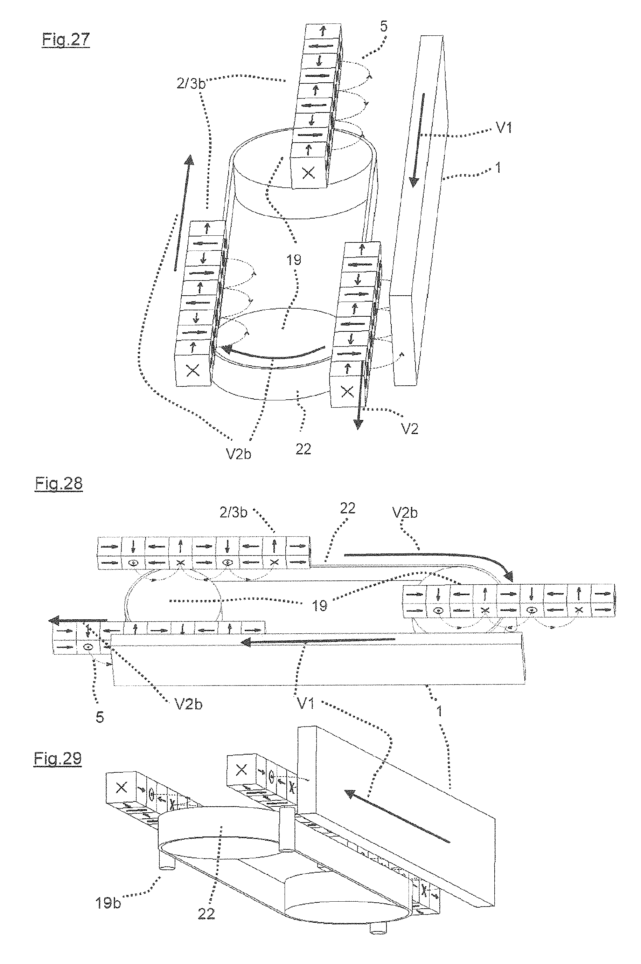

In Figur 27,28 und 29 wird eine erfindungsgemäße Vorrichtung gezeigt, bei der Magnetelemente bzw. Halbach Arrays (2/3b) auf einem um 2 Achsen (19) rotierenden Band (22) angebracht sind und deren verstärkte Magnetfelder (5) in Richtung eines seitlich passierenden metallischen Gegenelements (1) ausgerichtet sind. Die einzelnen Halbach Arrays sind jeweils auf Achsen (19b) rotierbar zum umlaufenden Band angeordnet, so dass eine Orientierung und Bewegung parallel zur Bewegungsrichtung V1 des Gegenelements (1) möglich ist, welches sowohl aus einzelnen Segmenten, wie auch kontinuierlich (z.B. in Form einer Schiene) wie auch in Form eines Metallrades aufgebaut sein kann. Mittels an den Magnetelementen anliegenden oder von diesen durchlaufenen Spulen ist bei Bewegung ein Wechselstrom zur Versorgung eines Verbrauchers induzierbar.

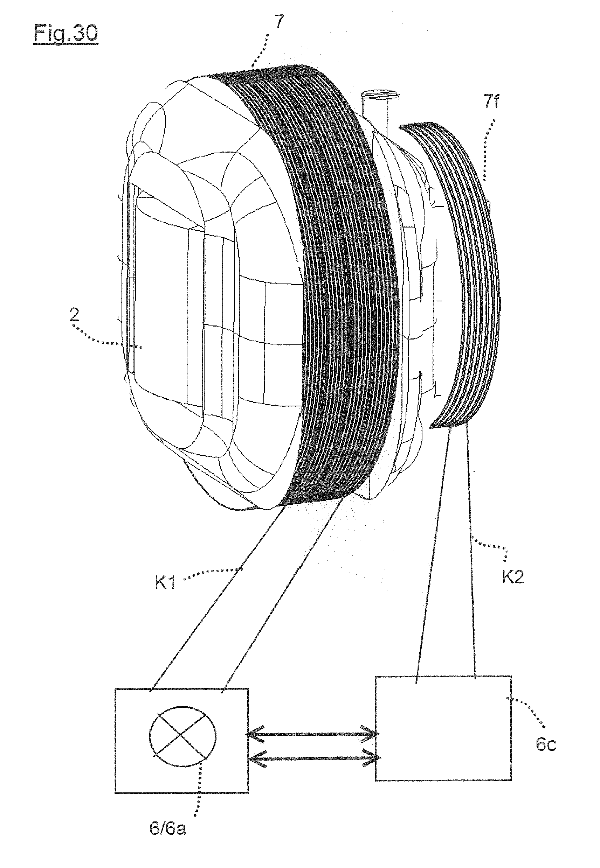

Figur 30 zeigt eine erfindungsgemäße Vorrichtung bei der ein in einer Spule (7) rotierbares Magnetelement zur Versorgung eines Verbrauchers (6) (z.B. LED Beleuchtung) verwendbar ist. Eine zusätzliche Spule (7f), die entsprechend der Magnetfeldanordnung außen anliegend am Magnetelement (2) platziert ist, ermöglicht die galvanisch getrennte Versorgung eines zweiten Verbrauchers. Hier wird ein Mikrocontroller (6c) galvanisch getrennt vom Hauptstromkreis (K1) in einem leistungsmäßig niedriger ausgelegtem Stromkreis (K2) versorgt. Dies ermöglicht beispielsweise eine äußerst effiziente Wechselstromschaftung mittels Doppel-Mosfet Schaltern zur Steuerung einer Standlicht- sowie Reihen-Parallelumschaltung.

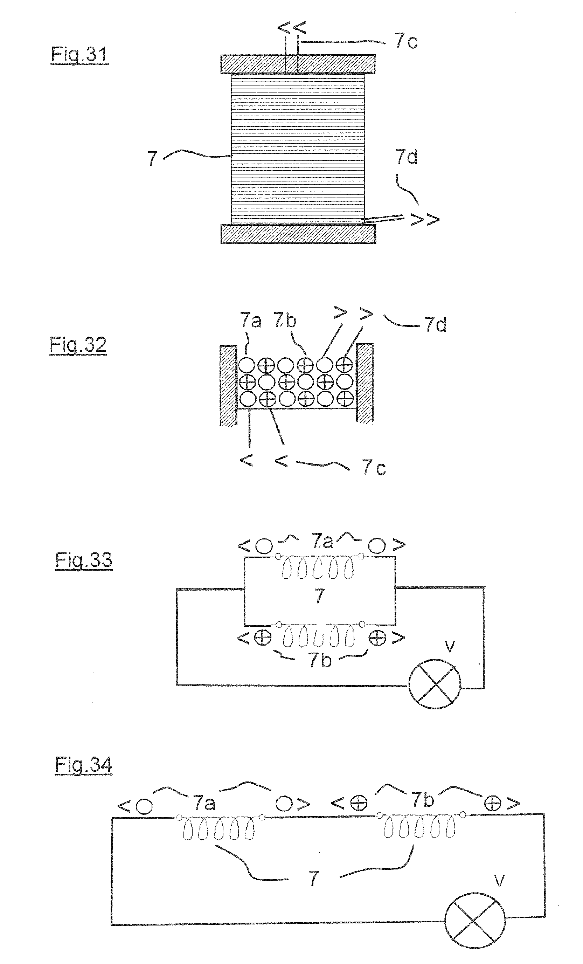

In Figur 31 , Figur 32, Figur 33 und Figur 34 wird eine Spule (7) mit zwei parallelen Drähten (7a) und (7b) gezeigt. Figur 31 zeigt die Spule mit je zwei bezüglich eines Schaltkreises innenliegenden Drahtenden (7c) und zwei außenliegenden Drahtenden (7d).

Figur 32 zeigt einen Spulenquerschnitt der Spule (7), wobei die Drähte (7a) und (7b) gleichen Querschnitt und gleiche Orientierung aufweisen.

Figur 33 zeigt die Parallelschaltung der Drähte (7a) und (7b), die bezüglich Widerstand und Spannung gleichzusetzen mit einer Einfachverdrahtung entsprechend der Querschnittssummenfläche von (7a) und (7b) ist.

Figur 34 zeigt die Reihenschaltung der Drähte (7a) und (7b), wobei das bezüglich des Schaltkreises innenliegende Drahtende von (7b) mit dem außenliegenden Drahtende von (7a) verbunden ist. Auf diese Weise bleibt die Orientierung innerhalb der Spule (7) für beide Drähte identisch und es wird ein höherer Spannungswert bei höherem Spuleninnenwiderstand als bei der Parallelschaltung erzielt. Die Reihenschaltung eignet sich somit für niedrigere Geschwindigkeiten, wo höhere Spannungen erforderlich sind, während die Parallelschaltung in Figur 34 bei höheren Geschwindigkeiten aufgrund des geringeren Spuleninnenwiderstands effektiver ist. Um die Umschaltung zwischen der in Figur 33 gezeigten Parallelschaltung und der in Figur 34 gezeigten Reihenschaltung geschwindigkeitsabhängig im Betrieb auszuführen, ist idealerweise eine elektronische Schaltung, beispielsweise mittels eines Mikrocontrollers einzusetzen. Ein Gleichstrom ist effizient über Mosfets elektronisch zu schalten. Zur effizienten Schaltung von Wechselströmen sind antiseriell geschaltete Mosfets (6d) ideal.

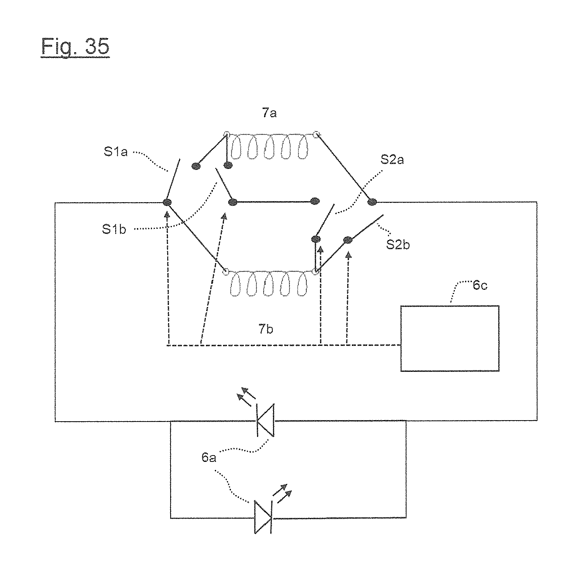

In Figur 35 ist eine Umschaltung zwischen Reihen- und Parallelschaltung der beiden Spulenwicklungen (7a) und (7b) über vier Schalter S1a, S1b, S2a, S2b dargestellt. Zur Herstellung einer Reihenschaltung sind S2a und S1 b zu schließen, für eine Parallelschaltung entsprechend S1a und S2b.

Die Schalter S1a und S2a sind mittels antiserieller Mosfets zu realisieren, während für S1b und S2b einfache Mosfets ausreichen. Um die Schaltung mittels eines Mikrocontrollers (6c) zu realisieren ist dieser galvanisch getrennt vom LED Stromkreis zu versorgen, idealerweise über ein in Figur 30 gezeigtes zweites separates Spulenelement.
Um eine LED-Beleuchtung als Verbraucher direkt mit dem vom Generator gelieferten Wechselstrom zu betreiben, ist eine Antiparallelschaltung zweier LEDs (6a) höchst effizient, da eine leistungsmindernde Gleichrichtung des Wechselstroms nicht erforderlich ist.

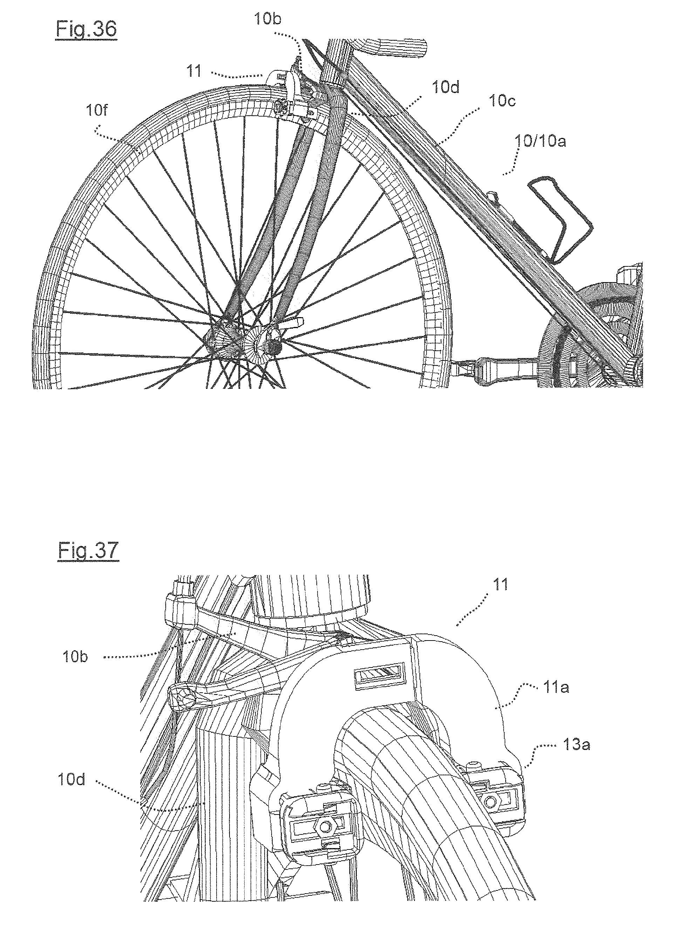

Figur 36 und 37 zeigen perspektivische Darstellungen einer an einem Fahrrad (10/10a) montierten erfindungsgemäßen Halterung (11) für einen berührungslos an der Radfelge (1c) arbeitenden Generator. Während am Hinterrad eine Anbringung am Rahmen (10c) möglich ist, ist beim Vorderrad die Fahrradgabel (10d) geeignet. Besonders geeignet ist die Anschraubung an einer bereits vorhandenen Bremsaufhängung. Der in Figur 36, 37 und 38 gezeigte Adapter ist seitlich an den Bremsarmen (10f) einer Seitenzugbremse (10b) angeschraubt.

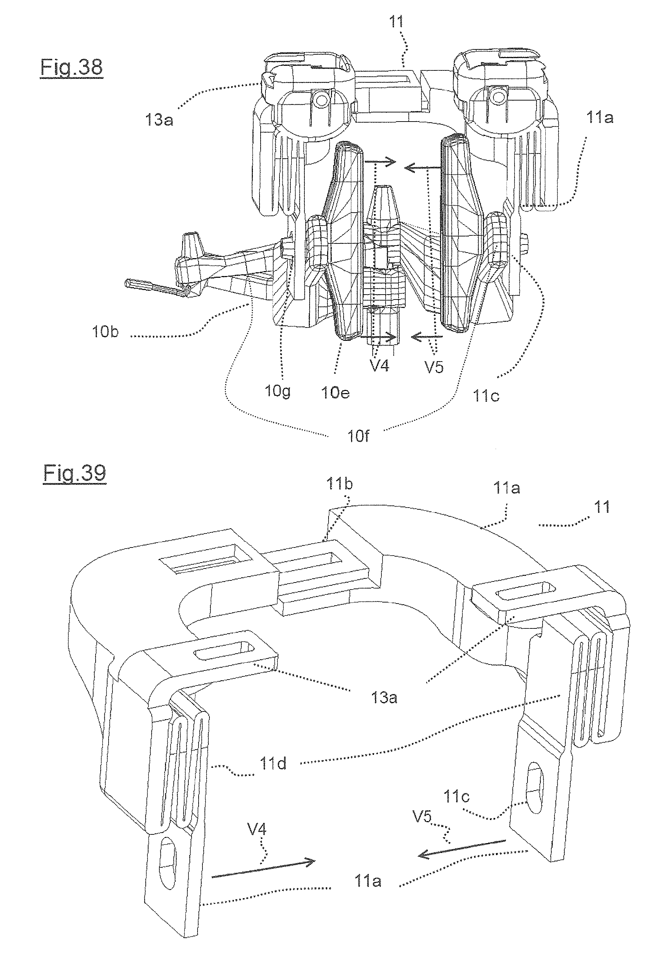

Figur 38 zeigt eine perspektivische Darstellungen des erfindungsgemäß an einer Seitenzugbremse (10b) angebrachten Adapters (11) von unten. Figur 39 zeigt einen erfindungsgemäßen Adapter (11) von unten.

Die Anschraubposition (10g) der Bremsklötze (10e) der Seitenzugbremse (10b) wird ebenso zur Anschraubung (11 c) des Adapters (11) verwendet.

Da sich die Bremsarme (10f) der Seitenzugbremse (10b) beim Bremsen in Richtung (V4/V5) der Felge nach innen bewegen, gilt dies auch für die angeschraubten Adapterarme (11 a). Um zu verhindern, dass das möglichst nah an der Felge angebrachte Generatorgehäuse ebenso in Richtung V4, V5 zur Felge mitbewegt wird, und durch Felgenberührung beschädigt wird, ist an jeden Adapterarm (11a) ein federndes Zwischenelement (11d) eingebaut, dass gegenüber den vorne am Adapter (11) vorhandenen Generatoraufnahmen (13b) federnd beweglich ist. Die beiden Generatoraufnahmen (13b) sind links- und rechtsseitig der Felge zur Anbringung zweier Generatoren positioniert und zusätzlich über eine starre oberhalb des Rades (1 b) verlaufende Brücke (11 b) verbunden. Diese Brücke kann über eine Verschraubung für unterschiedliche Reifen-/Felgenbreiten eingestellt werden und ist so stark aufgebaut, dass bei Bewegung der Adapterarme (11a) beim Abbremsen in Felgenrichtung V4/V5 keine Bewegung der Generatoraufhängungen (13b) in Felgenrichtung erfolgt, was über die Federelemente (11d) ausgeglichen wird. Somit verbleiben sehr dicht an der Felge positionierte Generatoren auch beim Abbremsen in ihrer Position und unerwünschte Felgenberührung wird vermieden.

## Patentansprüche

1. Vorrichtung zur berührungslosen Stromerzeugung an einem stromleitenden Gegenelement (1), mit zumindest einem bewegbar gelagerten magnetisch gestörten Magnetelement (2), und zumindest einer Spule (7), in deren wenigstens einer Wicklung durch das Magnetelement (2) bzw. durch ein weiteres mit dem Magnetelement (2) weiteres physikalisch gekoppeltes Magnetelement ein Strom induzierbar ist, der zum Betrieb eines Verbrauchers (6) verwendbar ist, wobei das Magnetelement (2) durch magnetische Wechselwirkung mit dem Gegenelement (1) bewegbar ist.

2. Vorrichtung nach Anspruch 1, **dadurch gekennzeichnet, dass** das Magnetelement (2) in Form eines Halbach-Zylinders 3a mit nach außen verstärktem Magnetfeld (5c) und im Inneren abgeschwächten Magnetfeld (5b) aufgebaut ist und/oder an der Ober -und Unterseite mit einer diamagnetischen Platte (Fig. 13, Fig.14; 4a) abgedeckt ist.

3. Vorrichtung nach Anspruch 1, **dadurch gekennzeichnet, dass** das Magnetelement (2) in Form eines Zylinders aus alternierenden Magneten (3e) aufgebaut ist, der an der Ober -und Unterseite mit einer diamagnetischen Platte (4a) abgedeckt ist.

4. Vorrichtung nach Anspruch 1, **dadurch gekennzeichnet, dass** das Magnetelement (2) in Form mindestens eines Halbach-Arrays (3b) mit optionaler diamagnetischer Bedeckung (4b) an Ober -und Unterseite und mit einem in Richtung des Gegenelements (1) verstärkten Magnetfeld (5) aufgebaut ist.

5. Vorrichtung nach Anspruch 4, **dadurch gekennzeichnet, dass** die Magnetelemente (2) bewegbar gelagert und gegen die Kraft eines Kraftspeichers (8) bewegbar sind, und beim Ausbleiben der Wirbelstromverzahnung mit Gegenelementen (1) durch den Kraftspeicher (8) in die Ausgangsposition zurückbewegt werden.

6. Vorrichtung nach Anspruch 4, **dadurch gekennzeichnet, dass** die Magnetelemente (2b) kreisförmig angeordnet sind (Fig. 23-Fig.26) mit jeweils verstärkten Magnetfeldern in Richtung des Gegenelements (1) und optionaler rotierbarer Aufhängung.

7. Vorrichtung nach Anspruch 1, **dadurch gekennzeichnet, dass** das Magnetelement (2) in Form mehrerer physikalisch gekoppelter Segmente gemäß Anspruch 4 (2b) aufgebaut ist, die parallel oder annähernd parallel zur Bewegungsrichtung V1 des Gegenelementes(1) angebracht sind, wobei jeweils mindestens eines der Segmente (2b) ausgehend von einer Startposition über Wirbelstromkopplung mit dem Gegenelement (1) über einen begrenzten Bereich bewegt wird, während mindestens ein weiteres Segment über die physikalische Kopplung zurück in eine neue Startposition bewegt wird.

8. Vorrichtung nach Anspruch 1, **dadurch gekennzeichnet, dass** das Magnetelement (2) in Form eines ringförmigen Halbach-Arrays (3c) mit optionalem diamagnetischen Außenring (4c) und mit einem in Richtung des Gegenelements (1) verstärkten Magnetfeld (5) aufgebaut ist.

9. Vorrichtung nach einem oder mehreren der vorherigen Ansprüche, **dadurch gekennzeichnet, dass** das Gegenelement (1) eine Schiene (1 a) ist und das Magnetelement (2) entlang oder oberhalb der Schiene bewegt wird.

10. Vorrichtung nach einem oder mehreren der vorherigen Ansprüche, **dadurch gekennzeichnet, dass** der Generator(13) mit dem darauf fixierten Magnetelement (2) ortsfest angebracht ist und von einem oder mehreren Gegenelementen (1) passiert wird.

11. Vorrichtung nach einem der Ansprüche 1 bis 8, **dadurch gekennzeichnet, dass** das Gegenelement (1) in einer Drehbewegung zum Magnetelement (2) bewegt wird, insbesondere derart, dass das Gegenelement (1) eine Felge(1c), oder Teil eines Rades (1 b) oder ein zusätzlich an einem Rad (1 b) angebrachtes Metall- oder Magnetstück (1d) ist, wobei das Magnetelement (2) am zugehörigen Fahrzeug (10), insbesondere an der Bremsaufhängung (10b) befestigt oder in den Fahrzeugrahmen (10c) bzw. Fahrradrahmen (10d) integriert ist.

12. Vorrichtung nach einem oder mehreren der vorherigen Ansprüche, **dadurch gekennzeichnet, dass** jeweils bei Relativbewegung zwischen Magnetelement (2) und metallischem Gegenelement (1) mittels des erzeugten Stroms ein Funksignal abgesendet wird.

13. Vorrichtung nach einem oder mehreren der vorherigen Ansprüche oder entsprechende Vorrichtung mit ungestörtem Magnetelement (2), **dadurch gekennzeichnet, dass** mittels einer automatischen Abstandsmessung -und Regulierung der Luftspalt (15) zwischen Magnetelement (2) und Gegenelement (1) annähernd konstant gehalten wird.

14. Vorrichtung nach einem oder mehreren der vorherigen Ansprüche oder entsprechende Vorrichtung mit ungestörtem Magnetelement (2), **dadurch gekennzeichnet, dass** der Generator(13) mittels einer Steuerung wechselweise in Leerlauf und mit Last betreibbar ist, derart dass die schnellere Magnetbewegung im Leerlauf zur höheren Leistungsabgabe unter Last verwendbar ist, und beispielsweise zur Abgabe eines Funksignals verwendbar ist.

15. Sensor mit Funkübermittlung, der über eine Vorrichtung nach einem oder mehreren der vorherigen Ansprüche versorgt wird.
